# EUROPEAN PATENT APPLICATION

(11) **EP 4 832 425 A1**
(43) Date of publication of application: **28.10.2026**
(21) Application number: 25744710.2
(22) Date of filing: 24.01.2025
(51) Int. Cl.: H04L 25/02

(54) **COMMUNICATION METHOD AND APPARATUS, AND TERMINAL DEVICE AND NETWORK DEVICE**

(30) Priority: 26.01.2024 CN 202410118669
(71) Applicant: Honor Device Co., Ltd., Shenzhen, Guangdong 518040 (CN)
(72) Inventor: CHI, Liangang, Shenzhen, Guangdong 518040 (CN)
(74) Representative: Gill Jennings & Every LLP
(86) International application number: PCT/CN2025/074541
(87) International publication number: WO 2025/157247

(57) **Abstract**

This application discloses a communication method and apparatus, a terminal device, and a network device, relating to the technical field of communications. In this application, a time domain window in which PDCCH/PDSCH DM-RSs are bundled can be determined by using time domain window information, and time units in the time domain window are considered as a same group. PDCCH/PDSCH DM-RSs of time units in the same group can be bundled together for channel estimation, and PDCCH/PDSCH DM-RSs of time units in different groups are not bundled. In this way, in this application, downlink channel estimation can be performed according to the PDCCH/PDSCH DM-RSs bundled in the time domain window, that is, channel estimation is performed by jointly using the PDCCH/PDSCH DM-RSs of the time units in the time domain window to implement joint downlink channel estimation, so as to obtain more accurate downlink channel information, improve downlink transmission quality, and downlink coverage enhancement.

## Description

This application claims priority to Chinese Patent Application No. 202410118669.4, filed with the China National Intellectual Property Administration on January 26, 2024 and entitled "COMMUNICATION METHOD AND APPARATUS, TERMINAL DEVICE, AND NETWORK DEVICE", which is incorporated herein by reference in its entirety.

### TECHNICAL FIELD

This application relates to the technical field of communications, and in particular, to a communication method and apparatus, a terminal device, and a network device.

### BACKGROUND

Some communication systems (for example, a non-terrestrial network (non-terrestrial networks, NTN) system) may have limited downlink coverage. In the limited downlink coverage, phenomena such as poor downlink signal quality, low channel estimation accuracy, and poor transmission quality may exist, thereby degrading downlink transmission quality of the communication system.

Therefore, how to obtain more accurate downlink channel information, improve downlink transmission quality of a communication system, and implement downlink coverage enhancement further needs to be researched.

### SUMMARY

According to a first aspect, this application provides a communication method, including:
receiving time domain window information, the time domain window information being used for determining a time domain window in which PDCCH/PDSCH DM-RSs are bundled; and
performing, by a terminal device, downlink channel estimation according to the PDCCH/PDSCH DM-RSs bundled in the time domain window.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

Optionally, the time domain window information includes periodic time domain window information or aperiodic time domain window information.

In this way, in this application, a periodic time domain window can be determined by using the periodic time domain window information, so that channel estimation can be performed by jointly using the PDCCH/PDSCH DM-RSs of the time units in the periodic time domain window, thereby implementing periodic joint downlink channel estimation. Alternatively, in this application, an aperiodic time domain window can be determined by using the aperiodic time domain window information, so that channel estimation can be performed by jointly using the PDCCH/PDSCH DM-RSs of the time units in the aperiodic time domain window, thereby implementing aperiodic joint downlink channel estimation.

Optionally, the periodic time domain window information includes at least one of the following: a time domain window length, a time domain window period, or a time domain window start position. The aperiodic time domain window information includes a time domain window length and/or a time domain window start position.

In this way, in this application, the periodic time domain window can be determined according to the time domain window length, the time domain window period, or the time domain window start position, so as to implement periodic joint downlink channel estimation according to the periodic time domain window. Alternatively, in this application, the aperiodic time domain window can be determined according to the time domain window length and/or the time domain window start position, so as to implement aperiodic joint downlink channel estimation according to the aperiodic time domain window.

Optionally, the time domain window length is in absolute time, and the absolute time refers to seconds, milliseconds, or microseconds. In this way, in this application, the time domain window length may be defined by using the absolute time.

Optionally, the time domain window length is in relative time, and the relative time refers to a quantity of system frames, a quantity of subframes, a quantity of slots, or a quantity of symbols. In this way, in this application, the time domain window length may be defined by using the relative time.

Optionally, the time domain window length is determined by the terminal device according to network configuration information.

It should be noted that the network device may send network configuration information to the terminal device. The network configuration information is used for configuring the time domain window length. In this way, the terminal device can determine the time domain window length according to the network configuration information, so as to implement network configuration of the time domain window length.

Optionally, the time domain window length is determined by the terminal device from a plurality of network-configured candidate time domain window lengths according to network indication information.

It should be noted that the network device configures a plurality of candidate time domain window lengths to the terminal device, and then sends network indication information to the terminal device. The network indication information is used for indicating one time domain window length from the plurality of candidate time domain window lengths. In this way, the terminal device can determine the time domain window length according to the network indication information, so as to implement network configuration of the time domain window length.

Optionally, the time domain window length is selected by the terminal device from a network-configured first value range, and the first value range is a value range within which the time domain window length falls.

It should be noted that the network device configures a value range within which the time domain window length falls to the terminal device. Then, the terminal device may select, according to a capability or requirement of the terminal device, one time domain window length from the value range within which the time domain window length falls.

Certainly, the terminal device may report the time domain window length selected by the terminal device to the network device, so that the network device learns a selection result of the terminal device.

Optionally, the time domain window length has an association relationship with a number of times of PDCCH/PDSCH repeated transmission, and the association relationship between the time domain window length and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the time domain window length may be established. Different numbers of times of PDCCH/PDSCH repeated transmission may be associated with different time domain window lengths. In this way, when the network device configures the number of times of PDCCH/PDSCH repeated transmission to the terminal device through signaling, the terminal device can determine the time domain window length according to the number of times of PDCCH/PDSCH repeated transmission and the foregoing association relationship, so as to implement implicit configuration of the time domain window length.

Optionally, the time domain window length has an association relationship with a beam or synchronization signal block (SSB), and the association relationship between the time domain window length and the beam or SSB is network-configured, preconfigured, or stipulated by a communication standard protocol.

It should be noted that in this application, the association relationship between the beam/SSB and the time domain window length may be established. Different beams/SSBs may be associated with different time domain window lengths, or different beam groups/SSB groups may be associated with different time domain window lengths. In this way, when the terminal device uses a certain beam or SSB, the terminal device can determine the time domain window length according to the beam or SSB and the foregoing association relationship, so as to implement implicit configuration of the time domain window length.

Optionally, the time domain window period is in absolute time, and the absolute time refers to seconds, milliseconds, or microseconds. In this way, in this application, the time domain window length may be defined by using the absolute time.

Optionally, the time domain window period is in relative time, and the relative time refers to a quantity of system frames, a quantity of subframes, a quantity of slots, or a quantity of symbols. In this way, in this application, the time domain window length may be defined by using the relative time.

Optionally, the time domain window period is determined by the terminal device according to network configuration information.

It should be noted that the network device may send network configuration information to the terminal device. The network configuration information is used for configuring the time domain window period. In this way, the terminal device can determine the time domain window period according to the network configuration information, so as to implement network configuration of the time domain window period.

Optionally, the time domain window period is determined by the terminal device from a plurality of network-configured candidate time domain window periods according to network indication information.

It should be noted that the network device configures a plurality of candidate time domain window periods to the terminal device, and then sends network indication information to the terminal device. The network indication information is used for indicating one time domain window period from the plurality of candidate time domain window periods. In this way, the terminal device can determine the time domain window period according to the network indication information, so as to implement network configuration of the time domain window period.

Optionally, the time domain window period is selected by the terminal device from a network-configured second value range, and the second value range is a value range within which the time domain window period falls.

It should be noted that the network device configures a value range within which the time domain window period falls to the terminal device. Then, the terminal device may select, according to a capability or requirement of the terminal device, one time domain window period from the value range within which the time domain window period falls.

Certainly, the terminal device may report the time domain window period selected by the terminal device to the network device, so that the network device learns a selection result of the terminal device.

Optionally, the time domain window period has an association relationship with a number of times of PDCCH/PDSCH repeated transmission, and the association relationship between the time domain window period and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the time domain window period may be established. Different numbers of times of PDCCH/PDSCH repeated transmission may be associated with different time domain window periods. In this way, when the network device configures the number of times of PDCCH/PDSCH repeated transmission to the terminal device through signaling, the terminal device can determine the time domain window period according to the number of times of PDCCH/PDSCH repeated transmission and the foregoing association relationship, so as to implement implicit configuration of the time domain window period.

Optionally, the time domain window period has an association relationship with the time domain window length, and the association relationship between the time domain window period and the time domain window length is network-configured, preconfigured, or stipulated by a communication standard protocol.

It should be noted that in this application, the association relationship between the time domain window length and the time domain window period may be established. Different time domain window lengths may be associated with different time domain window periods. In this way, when the network device configures the time domain window length to the terminal device through signaling, the terminal device can determine the time domain window period according to the time domain window length and the foregoing association relationship, so as to implement implicit configuration of the time domain window period.

Optionally, the time domain window period has an association relationship with a beam or SSB, and the association relationship between the time domain window period and the beam or SSB is network-configured, preconfigured, or stipulated by a communication standard protocol.

It should be noted that in this application, the association relationship between the beam/SSB and the time domain window period may be established. Different beams/SSBs may be associated with different time domain window periods, or different beam groups/SSB groups may be associated with different time domain window periods. In this way, when the terminal device uses a certain beam or SSB, the terminal device can determine the time domain window period according to the beam or SSB and the foregoing association relationship, so as to implement implicit configuration of the time domain window period.

Optionally, the time domain window start position is an absolute moment, and the absolute moment is represented by universal time coordinated (UTC), China standard time (CST), or Greenwich mean time (GMT). In this way, in this application, the time domain window start position may be defined by using the absolute moment.

Optionally, the time domain window start position is a relative moment, and the relative moment is represented by a system frame number, a subframe number, a slot number, or a symbol number. In this way, in this application, the time domain window start position may be defined by using the relative moment.

Optionally, the time domain window start position is determined according to an offset, the offset indicates an interval between a first time domain position and the time domain window start position in time domain, and the first time domain position uses a system frame with a particular number, a subframe with a particular number, a slot with a particular number, or an OFDM symbol with a particular number.

In this way, in this application, the terminal device can determine the periodic time domain window start position or the aperiodic time domain window start position according to the offset and the first time domain position.

Optionally, the first time domain position is a start position of a first system frame. In this way, the terminal device may determine the time domain window start position according to the start position of the first system frame and the offset.

Optionally, the first time domain position is a receiving position of signaling for configuring the offset. It can be understood that the network device sends signaling for configuring the offset to the terminal device. Correspondingly, the terminal device receives the signaling. In this way, the terminal device may determine the time domain window start position according to the receiving position of the signaling and the offset.

Optionally, the first time domain position is a receiving position of signaling for indicating an aperiodic time domain window start or restart. It can be understood that the network device send signaling for indicating the aperiodic time domain window start or restart to the terminal device. Correspondingly, the terminal device receives the signaling. In this way, the terminal device can determine the time domain window start position according to the position of the signaling and the offset. The offset is configured by another signaling or stipulated by a communication standard protocol.

Optionally, the first time domain position is a feedback position of a HARQ-ACK corresponding to the signaling for indicating an aperiodic time domain window start or restart. It can be understood that the network device sends signaling for indicating the aperiodic time domain window start or restart to the terminal device. Correspondingly, the terminal device feeds back the HARQ-ACK corresponding to the signaling to the network device. In this way, the terminal device may determine the time domain window start position according to the feedback position of the HARQ-ACK corresponding to the signaling and the offset. The offset is configured by another signaling or stipulated by a communication standard protocol.

Optionally, a periodic time domain window start position is determined according to the following equation:$\left(N⋅{n}_{f}+{n}_{s}-{T}_{offset}\right) mod T = 0 ;$
where *N* represents a quantity of time units in a system frame, *n_{f}* represents a system frame number, *nₛ* represents a time unit number in the system frame, *T* represents the time domain window period, mod represents modulo, and *T_{offset}* represents an offset.

In this way, in this application, the terminal device can determine the time domain window start position according to the offset and the time domain window period.

Optionally, the offset is determined by the terminal device according to network configuration information.

It should be noted that the network device may send network configuration information to the terminal device. The network configuration information is used for configuring the offset. In this way, the terminal device can determine the offset according to the network configuration information, so as to implement network configuration of the offset.

Optionally, the offset is determined by the terminal device from a plurality of network-configured candidate offsets according to network indication information.

It should be noted that the network device configures a plurality of candidate offsets to the terminal device, and then sends network indication information to the terminal device. The network indication information is used for indicating one offset from the plurality of candidate offsets. In this way, the terminal device can determine the offset according to the network indication information, so as to implement network configuration of the offset.

Optionally, the offset is selected by the terminal device from a network-configured third value range, and the third value range is a value range within which the offset falls.

It should be noted that the network device configures a value range within which the offset falls to the terminal device. Then, the terminal device may select, according to a capability or requirement of the terminal device, one offset from the value range within which the offset falls.

Certainly, the terminal device may report the offset selected by the terminal device to the network device, so that the network device learns a selection result of the terminal device.

Optionally, the offset has an association relationship with a number of times of PDCCH/PDSCH repeated transmission, and the association relationship between the offset and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the offset may be established. Different numbers of times of PDCCH/PDSCH repeated transmission may be associated with different offsets. In this way, when the network device configures the number of times of PDCCH/PDSCH repeated transmission to the terminal device through signaling, the terminal device can determine the offset according to the number of times of PDCCH/PDSCH repeated transmission and the foregoing association relationship, so as to implement implicit configuration of the offset.

Optionally, the offset has an association relationship with the time domain window length, and the association relationship between the offset and the time domain window length is network-configured, preconfigured, or stipulated by a communication standard protocol.

It should be noted that in this application, the association relationship between the time domain window length and the offset may be established. Different time domain window lengths may be associated with different offsets. In this way, when the network device configures the time domain window length to the terminal device through signaling, the terminal device can determine the offset according to the time domain window length and the foregoing association relationship, so as to implement implicit configuration of the offset.

Optionally, the offset has an association relationship with the time domain window period, and the association relationship between the offset and the time domain window period is network-configured, preconfigured, or stipulated by a communication standard protocol.

It should be noted that in this application, the association relationship between the time domain window period and the offset may be established. Different time domain window periods may be associated with different offsets. In this way, when the network device configures the time domain window period to the terminal device through signaling, the terminal device can determine the offset according to the time domain window period and the foregoing association relationship, so as to implement implicit configuration of the offset.

Optionally, the offset has an association relationship with the beam or SSB, and the association relationship between the offset and the beam or SSB is network-configured, preconfigured, or stipulated by a communication standard protocol.

It should be noted that in this application, the association relationship between the beam/SSB and the offset may be established. Different beams/SSBs may be associated with different offsets, or different beam groups/SSB groups may be associated with different offsets. In this way, when the terminal device uses a certain beam or SSB, the terminal device can determine the offset according to the beam or SSB and the foregoing association relationship, so as to implement implicit configuration of the offset.

Optionally, a carrier that is in the time domain window and is used for carrying PDCCH/PDSCH satisfies requirements for power consistency and phase continuity.

It should be noted that, the carrier that is sent by the network device in the time domain window and is used for carrying the PDCCH/PDSCH satisfies the requirements for power consistency and phase continuity. In other words, the terminal device may consider that the carrier that is sent by the network device in the time domain window and is used for carrying the PDCCH/PDSCH satisfies the requirements for power consistency and phase continuity.

Optionally, the performing downlink channel estimation according to the PDCCH/PDSCH DM-RSs bundled in the time domain window includes: performing downlink channel estimation according to the PDCCH/PDSCH DM-RSs bundled in the time domain window when the quality of a received signal is less than a preset threshold.

It should be noted that some terminal devices may need to perform joint downlink channel estimation, and some other terminal devices may not need to perform joint downlink channel estimation. This is because for terminal devices that have poor channel quality (for example, the quality of the received signal (such as RSRP, RSRQ, or SINR) of the terminal devices is less than the preset threshold) with the network device, these terminal devices cannot obtain accurate downlink channel information due to the poor channel quality, so these terminal devices may need to perform joint downlink channel estimation; but for terminal devices that have good channel quality (for example, the quality of the received signal of the terminal devices is greater than the preset threshold) with the network device, these terminal devices can obtain accurate downlink channel information due to the good channel quality, so these terminal device may not need to perform joint downlink channel estimation.

In this way, when the quality of the received signal is less than the preset threshold, it indicates that the terminal device has poor channel quality with the network device. Therefore, the terminal device may perform joint downlink channel estimation according to the time domain window information, to obtain more accurate downlink channel information.

Optionally, before the receiving time domain window information, the method further includes: sending information for indicating a PDCCH/PDSCH DM-RS bundling capability, the PDCCH/PDSCH DM-RS bundling capability including at least one of the following: a time domain window length supported by the terminal device, a time domain window period supported by the terminal device, or a time domain window start position supported by the terminal device.

In this way, the network device is notified of the TDW length supported by the terminal device, the time domain window period supported by the terminal device, or the time domain window start position supported by the terminal device by using the information, so as to assist the network device in configuring the TDW length, the time domain window period, or the time domain window start position.

According to a second aspect, this application provides a communication method, including:
sending time domain window information, the time domain window information being used for determining a time domain window in which PDCCH/PDSCH DM-RSs are bundled.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

Optionally, the time domain window information includes periodic time domain window information or aperiodic time domain window information.

In this way, in this application, a periodic time domain window can be determined by using the periodic time domain window information, so that channel estimation can be performed by jointly using the PDCCH/PDSCH DM-RSs of the time units in the periodic time domain window, thereby implementing periodic joint downlink channel estimation. Alternatively, in this application, an aperiodic time domain window can be determined by using the aperiodic time domain window information, so that channel estimation can be performed by jointly using the PDCCH/PDSCH DM-RSs of the time units in the aperiodic time domain window, thereby implementing aperiodic joint downlink channel estimation.

Optionally, the periodic time domain window information includes at least one of the following: a time domain window length, a time domain window period, or a time domain window start position. The aperiodic time domain window information includes a time domain window length and/or a time domain window start position.

In this way, in this application, the periodic time domain window can be determined according to the time domain window length, the time domain window period, or the time domain window start position, so as to implement periodic joint downlink channel estimation according to the periodic time domain window. Alternatively, in this application, the aperiodic time domain window can be determined according to the time domain window length and/or the time domain window start position, so as to implement aperiodic joint downlink channel estimation according to the aperiodic time domain window.

Optionally, the time domain window length is in absolute time, and the absolute time refers to seconds, milliseconds, or microseconds. In this way, in this application, the time domain window length may be defined by using the absolute time.

Optionally, the time domain window length is in relative time, and the relative time refers to a quantity of system frames, a quantity of subframes, a quantity of slots, or a quantity of symbols. In this way, in this application, the time domain window length may be defined by using the relative time.

Optionally, the time domain window length is configured by the network device.

It should be noted that the network device may send network configuration information to the terminal device. The network configuration information is used for configuring the time domain window length. In this way, network configuration of the time domain window length can be implemented according to the network configuration information.

Optionally, the time domain window length is indicated by the network device from a plurality of configured candidate time domain window lengths.

It should be noted that the network device configures a plurality of candidate time domain window lengths to the terminal device, and then sends network indication information to the terminal device. The network indication information is used for indicating one time domain window length from the plurality of candidate time domain window lengths. In this way, the terminal device can determine the time domain window length according to the network indication information, so as to implement network configuration of the time domain window length.

Optionally, the time domain window length has an association relationship with a number of times of PDCCH/PDSCH repeated transmission, and the association relationship between the time domain window length and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the time domain window length may be established. Different numbers of times of PDCCH/PDSCH repeated transmission may be associated with different time domain window lengths. In this way, when the network device configures the number of times of PDCCH/PDSCH repeated transmission to the terminal device through signaling, the terminal device can determine the time domain window length according to the number of times of PDCCH/PDSCH repeated transmission and the foregoing association relationship, so as to implement implicit configuration of the time domain window length.

Optionally, the time domain window length has an association relationship with a beam or synchronization signal block (SSB), and the association relationship between the time domain window length and the beam or SSB is network-configured, preconfigured, or stipulated by a communication standard protocol.

It should be noted that in this application, the association relationship between the beam/SSB and the time domain window length may be established. Different beams/SSBs may be associated with different time domain window lengths, or different beam groups/SSB groups may be associated with different time domain window lengths. In this way, when the terminal device uses a certain beam or SSB, the terminal device can determine the time domain window length according to the beam or SSB and the foregoing association relationship, so as to implement implicit configuration of the time domain window length.

Optionally, the time domain window period is in absolute time, and the absolute time refers to seconds, milliseconds, or microseconds. In this way, in this application, the time domain window length may be defined by using the absolute time.

Optionally, the time domain window period is in relative time, and the relative time refers to a quantity of system frames, a quantity of subframes, a quantity of slots, or a quantity of symbols. In this way, in this application, the time domain window length may be defined by using the relative time.

Optionally, the time domain window period is configured by the network device.

It should be noted that the network device may send network configuration information to the terminal device. The network configuration information is used for configuring the time domain window period. In this way, the terminal device can determine the time domain window period according to the network configuration information, so as to implement network configuration of the time domain window period.

Optionally, the time domain window period is indicated by the network device from a plurality of configured candidate time domain window periods.

It should be noted that the network device configures a plurality of candidate time domain window periods to the terminal device, and then sends network indication information to the terminal device. The network indication information is used for indicating one time domain window period from the plurality of candidate time domain window periods. In this way, the terminal device can determine the time domain window period according to the network indication information, so as to implement network configuration of the time domain window period.

Optionally, the time domain window period has an association relationship with a number of times of PDCCH/PDSCH repeated transmission, and the association relationship between the time domain window period and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the time domain window period may be established. Different numbers of times of PDCCH/PDSCH repeated transmission may be associated with different time domain window periods. In this way, when the network device configures the number of times of PDCCH/PDSCH repeated transmission to the terminal device through signaling, the terminal device can determine the time domain window period according to the number of times of PDCCH/PDSCH repeated transmission and the foregoing association relationship, so as to implement implicit configuration of the time domain window period.

Optionally, the time domain window period has an association relationship with the time domain window length, and the association relationship between the time domain window period and the time domain window length is network-configured, preconfigured, or stipulated by a communication standard protocol.

It should be noted that in this application, the association relationship between the time domain window length and the time domain window period may be established. Different time domain window lengths may be associated with different time domain window periods. In this way, when the network device configures the time domain window length to the terminal device through signaling, the terminal device can determine the time domain window period according to the time domain window length and the foregoing association relationship, so as to implement implicit configuration of the time domain window period.

Optionally, the time domain window period has an association relationship with a beam or SSB, and the association relationship between the time domain window period and the beam or SSB is network-configured, preconfigured, or stipulated by a communication standard protocol.

It should be noted that in this application, the association relationship between the beam/SSB and the time domain window period may be established. Different beams/SSBs may be associated with different time domain window periods, or different beam groups/SSB groups may be associated with different time domain window periods. In this way, when the terminal device uses a certain beam or SSB, the terminal device can determine the time domain window period according to the beam or SSB and the foregoing association relationship, so as to implement implicit configuration of the time domain window period.

Optionally, the time domain window start position is an absolute moment, and the absolute moment is represented by universal time coordinated (UTC), China standard time (CST), or Greenwich mean time (GMT). In this way, in this application, the time domain window start position may be defined by using the absolute moment.

Optionally, the time domain window start position is a relative moment, and the relative moment is represented by a system frame number, a subframe number, a slot number, or a symbol number. In this way, in this application, the time domain window start position may be defined by using the relative moment.

Optionally, the time domain window start position is determined according to an offset, the offset indicates an interval between a first time domain position and the time domain window start position in time domain, and the first time domain position uses a system frame with a particular number, a subframe with a particular number, a slot with a particular number, or an OFDM symbol with a particular number.

In this way, in this application, the terminal device can determine the periodic time domain window start position or the aperiodic time domain window start position according to the offset and the first time domain position.

Optionally, the first time domain position is a start position of a first system frame. In this way, the terminal device may determine the time domain window start position according to the start position of the first system frame and the offset.

Optionally, the first time domain position is a receiving position of signaling for configuring the offset. It can be understood that the network device sends signaling for configuring the offset to the terminal device. Correspondingly, the terminal device receives the signaling. In this way, the terminal device may determine the time domain window start position according to the receiving position of the signaling and the offset.

Optionally, the first time domain position is a receiving position of signaling for indicating an aperiodic time domain window start or restart. It can be understood that the network device send signaling for indicating the aperiodic time domain window start or restart to the terminal device. Correspondingly, the terminal device receives the signaling. In this way, the terminal device can determine the time domain window start position according to the position of the signaling and the offset. The offset is configured by another signaling or stipulated by a communication standard protocol.

Optionally, the first time domain position is a feedback position of a HARQ-ACK corresponding to the signaling for indicating an aperiodic time domain window start or restart. It can be understood that the network device sends signaling for indicating the aperiodic time domain window start or restart to the terminal device. Correspondingly, the terminal device feeds back the HARQ-ACK corresponding to the signaling to the network device. In this way, the terminal device may determine the time domain window start position according to the feedback position of the HARQ-ACK corresponding to the signaling and the offset. The offset is configured by another signaling or stipulated by a communication standard protocol.

Optionally, a periodic time domain window start position is determined according to the following equation: $\left(N⋅{n}_{f}+{n}_{s}-{T}_{offset}\right) mod T = 0 ;$
where *N* represents a quantity of time units in a system frame, *n_{f}* represents a system frame number, *nₛ* represents a time unit number in the system frame, *T* represents the time domain window period, mod represents modulo, and *T_{offset}* represents an offset.

In this way, in this application, the terminal device can determine the time domain window start position according to the offset and the time domain window period.

Optionally, the offset is configured by the network device.

It should be noted that the network device may send network configuration information to the terminal device. The network configuration information is used for configuring the offset. In this way, the terminal device can determine the offset according to the network configuration information, so as to implement network configuration of the offset.

Optionally, the offset is indicated by the network device from a plurality of configured candidate offsets.

It should be noted that the network device configures a plurality of candidate offsets to the terminal device, and then sends network indication information to the terminal device. The network indication information is used for indicating one offset from the plurality of candidate offsets. In this way, the terminal device can determine the offset according to the network indication information, so as to implement network configuration of the offset.

Optionally, the offset has an association relationship with a number of times of PDCCH/PDSCH repeated transmission, and the association relationship between the offset and the number of times of PDCCH/PDSCH repeated transmission is network-configured, preconfigured, or stipulated by a communication standard protocol.

It should be noted that in this application, the association relationship between the number of times of PDCCH/PDSCH repeated transmission and the offset may be established. Different numbers of times of PDCCH/PDSCH repeated transmission may be associated with different offsets. In this way, when the network device configures the number of times of PDCCH/PDSCH repeated transmission to the terminal device through signaling, the terminal device can determine the offset according to the number of times of PDCCH/PDSCH repeated transmission and the foregoing association relationship, so as to implement implicit configuration of the offset.

Optionally, the offset has an association relationship with the time domain window length, and the association relationship between the offset and the time domain window length is network-configured, preconfigured, or stipulated by a communication standard protocol.

It should be noted that in this application, the association relationship between the time domain window length and the offset may be established. Different time domain window lengths may be associated with different offsets. In this way, when the network device configures the time domain window length to the terminal device through signaling, the terminal device can determine the offset according to the time domain window length and the foregoing association relationship, so as to implement implicit configuration of the offset.

Optionally, the offset has an association relationship with the time domain window period, and the association relationship between the offset and the time domain window period is network-configured, preconfigured, or stipulated by a communication standard protocol.

It should be noted that in this application, the association relationship between the time domain window period and the offset may be established. Different time domain window periods may be associated with different offsets. In this way, when the network device configures the time domain window period to the terminal device through signaling, the terminal device can determine the offset according to the time domain window period and the foregoing association relationship, so as to implement implicit configuration of the offset.

Optionally, the offset has an association relationship with the beam or SSB, and the association relationship between the offset and the beam or SSB is network-configured, preconfigured, or stipulated by a communication standard protocol.

It should be noted that in this application, the association relationship between the beam/SSB and the offset may be established. Different beams/SSBs may be associated with different offsets, or different beam groups/SSB groups may be associated with different offsets. In this way, when the terminal device uses a certain beam or SSB, the terminal device can determine the offset according to the beam or SSB and the foregoing association relationship, so as to implement implicit configuration of the offset.

Optionally, a carrier that is in the time domain window and is used for carrying PDCCH/PDSCH satisfies requirements for power consistency and phase continuity.

It should be noted that, the carrier that is sent by the network device in the time domain window and is used for carrying the PDCCH/PDSCH satisfies the requirements for power consistency and phase continuity. In other words, the terminal device may consider that the carrier that is sent by the network device in the time domain window and is used for carrying the PDCCH/PDSCH satisfies the requirements for power consistency and phase continuity.

Optionally, before the sending time domain window information, the method further includes: receiving information for indicating a PDCCH/PDSCH DM-RS bundling capability, the PDCCH/PDSCH DM-RS bundling capability including at least one of the following: a time domain window length supported by the terminal device, a time domain window period supported by the terminal device, or a time domain window start position supported by the terminal device.

In this way, the network device is notified of the TDW length supported by the terminal device, the time domain window period supported by the terminal device, or the time domain window start position supported by the terminal device by using the information, so as to assist the network device in configuring the TDW length, the time domain window period, or the time domain window start position.

According to a third aspect, this application provides a communication apparatus, including:
a receiving unit, configured to receive time domain window information, the time domain window information being used for determining a time domain window in which PDCCH/PDSCH DM-RSs are bundled; and
an estimation unit, configured to perform downlink channel estimation according to the PDCCH/PDSCH DM-RSs bundled in the time domain window.

According to a fourth aspect, this application provides a communication apparatus, including:
a sending unit, configured to send time domain window information, the time domain window information being used for determining a time domain window in which PDCCH/PDSCH DM-RSs are bundled.

According to a fifth aspect, the steps in the method according to the first aspect are applied to a terminal device.

According to a sixth aspect, the steps in the method according to the second aspect are applied to a network device.

According to a seventh aspect, this application provides a terminal device, including a processor, a memory, and a computer program or an instruction stored in the memory. The processor executes the computer program or the instruction to implement the steps in the method according to the first aspect.

According to an eighth aspect, this application provides a network device, including a processor, a memory, and a computer program or an instruction stored in the memory. The processor executes the computer program or the instruction to implement the steps in the method according to the second aspect.

According to a ninth aspect, this application provides a chip, including a processor. The processor executes the steps in the method according to the first aspect or the second aspect.

According to a tenth aspect, this application provides a chip module, includes a transceiver component and a chip. The chip includes a processor. The processor executes the steps in the method according to the first aspect or the second aspect.

According to an eleventh aspect, this application provides a computer-readable storage medium. The computer-readable storage medium stores a computer program or an instruction. When the computer program or the instruction is executed, the steps in the method according to the first aspect or the second aspect are implemented.

According to a twelfth aspect, this application provides a computer program product, including a computer program or an instruction. When the computer program or the instruction is executed, the steps in the method according to the first aspect or the second aspect are executed. Exemplarily, the computer program product may be a software installation package.

For beneficial effects brought by the technical solutions of the third aspect to the twelfth aspect, reference may be made to technical effects brought by the technical solution of the first aspect, and details are not described herein again.

### BRIEF DESCRIPTION OF DRAWINGS

FIG. 1 is a schematic architecture diagram of a communication system according to an embodiment of this application;
FIG. 2 is a schematic architecture diagram of an NTN communication system according to an embodiment of this application;
FIG. 3 to FIG. 9 are schematic flowcharts of a communication method according to an embodiment of this application;
FIG. 10 is a schematic structural diagram of distribution of a TDW in time domain according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of yet another communication method according to an embodiment of this application;
FIG. 14 is a composition block diagram of functional units of a communication apparatus according to an embodiment of this application;
FIG. 15 is a composition block diagram of functional units of another communication apparatus according to an embodiment of this application;
FIG. 16 is a schematic structural diagram of a terminal device according to an embodiment of this application; and
FIG. 17 is a schematic structural diagram of a network device according to an embodiment of this application.

### DESCRIPTION OF EMBODIMENTS

It should be understood that the terms "first", "second", and the like involved in embodiments of this application are intended to distinguish different objects, but are not intended to describe a specific sequence. In addition, the terms "include", "have", and any variant thereof are intended to cover a non-exclusive inclusion. For example, a process, method, software, product, or device including a series of steps or units is not limited to the listed steps or units, but instead, optionally further includes other steps or units not listed, or optionally further includes other steps or units inherent to the process, method, product, or device.

The term "embodiment" mentioned in the embodiments of this application means that a specific feature, structure, or characteristic described in combination with an embodiment may be included in at least one embodiment of this application. The term appearing at different positions of the specification may not necessarily refer to the same embodiment or an independent or alternative embodiment that is mutually exclusive with another embodiment. A person skilled in the art explicitly or implicitly understands that the embodiments described in the specification may be combined with other embodiments.

In the embodiments of this application, "at least one" means one or more, and "a plurality of" means two or more.

In the embodiments of this application, the term "and/or" describes an association relationship between associated objects and indicates that three relationships may exist. For example, A and/or B may indicate the following three cases: only A exists, both A and B exist, and only B exists. A and B may be singular or plural. The character "/" may represent an "or" relationship between associated objects. In addition, the character "/" may represent the division symbol, for example, A/B represents A divided by B.

"At least one of the following items" or a similar expression thereof in the embodiments of this application refers to any combination of these items, including a single item or any combination of a plurality of items. For example, at least one of a, b, or c may represent the following seven cases: a, b, c, a and b, a and c, b and c, and a, b, and c. Each of a, b, and c may be an element, or may be a set including one or more elements.

In the embodiments of this application, "of (of)", "corresponding (corresponding, relevant)", "corresponding (corresponding)", "associated (associated, related)", "mapped (mapped)" may be used in combination. It should be noted that when a difference is not emphasized, concepts or meanings to be expressed are the same.

The terms "network" and "system" in the embodiments of this application may express the same concept, and a communication system is a communication network.

"Connected" in the embodiments of this application refers to various connection manners such as a direct connection or an indirect connection, to implement communication between devices, which is not specifically limited.

The following specifically describes related content involved in the technical solutions in the embodiments of this application.

The following describes the communication system of this embodiment in detail.

The technical solutions in the embodiments of this application may be applied to various wireless communication systems, for example, a long term evolution (long term evolution, LTE) system, an advanced long term evolution (advanced long term evolution, LTE-A) system, a New Radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial networks, NTN) system, a universal mobile telecommunication system (universal mobile telecommunication system, UMTS), a 6th-Generation (6th-Generation, 6G) communication system, or other future communication systems.

It should be noted that a conventional communication system supports a limited quantity of user connections and is easy to implement. With development of communication technologies, a communication system of this application not only can support a conventional communication system, but also can support, for example, device to device (device to device, D2D) communication, machine to machine (machine to machine, M2M) communication, machine type communication (machine type communication, MTC), vehicle to vehicle (vehicle to vehicle, V2V) communication, vehicle to everything (vehicle to everything, V2X) communication, narrow band internet of things (narrow band internet of things, NB-IoT) communication, and the like. Therefore, the technical solutions of the embodiments of this application may also be applied to the above communication systems.

For example, the embodiments of this application may be applied to a deployment scenario such as beamforming (beamforming), carrier aggregation (carrier aggregation, CA), dual connectivity (dual connectivity, DC), or standalone (standalone, SA).

For another example, the embodiments of this application may be applied to a communication scenario with an unlicensed spectrum. In the embodiments of this application, the unlicensed spectrum may also be considered as a shared spectrum. Alternatively, the embodiments of this application may be applied to a licensed spectrum. The licensed spectrum may also be considered as a non-shared spectrum.

To deal with the challenge of wireless broadband technologies and keep a leading advantage of the 3GPP network, the 3GPP standards body formulates a next generation system (next generation system), which is referred to as a 5G network architecture. This architecture not only supports a wireless technology (such as LTE) defined by 3GPP standards body to access a 5G core network (5G core network, 5GC), but also supports a non-3GPP access technology to access 5GC by using a non-3GPP interworking function (non-3GPP interworking function, N3IWF), a trusted non-3GPP gateway function (trusted non-3GPP gateway function, TNGF), a trusted WLAN interworking function (trusted WLAN interworking function, TWIF), or a next generation packet data gateway (next generation packet data gateway, NG-PDG). The core network functions are divided into a user plane function (user plane function, UPF) network element and a control plane function (control plane function, CPF) network element. The UPF is mainly responsible for packet data forwarding, quality of service (quality of service, QoS) control, charging information statistics collection, and the like. The CPF is mainly responsible for user registration and authentication, mobility management, sending of packet forwarding policy and QoS control policy to the UPF, and the like, and may be further subdivided into an access and mobility management function (access and mobility management function, AMF) and a session management function (session management function, SMF).

The core network device includes, for example, a mobility management entity (mobility management entity, MME) and a broadcast multicast service center (broadcast multicast service center, BMSC), or may also include a corresponding functional entity in the 5G system, for example, a core network control plane (control plane, CP) or user plane (user plane, UP) network function, such as an SMF or an AMF. The core network control plane may also be understood as a core network control plane function (control plane function, CPF) entity.

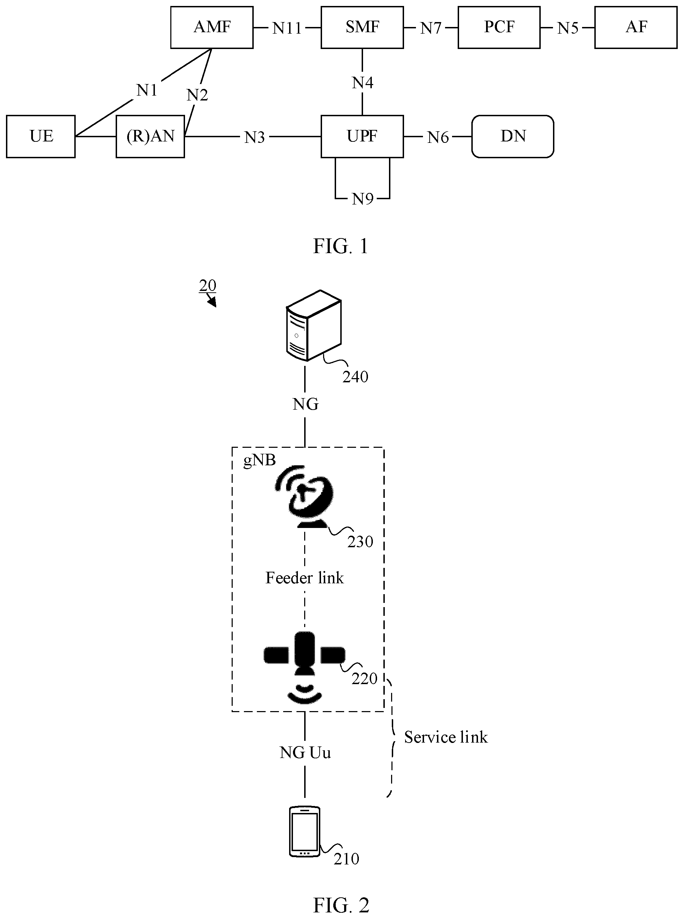

FIG. 1 is a schematic architecture diagram of a communication system applicable to an embodiment of this application. Functions of a terminal device and network entities are described below.

Radio access network (radio access network, RAN): a network including a plurality of 5G-RAN nodes, which implements a radio physical layer function, resource scheduling and radio resource management, radio access control, and a mobility management function. The 5G-RAN is connected to the UPF through a user plane interface N3, and is configured to transmit data of the terminal device. The 5G-RAN establishes a control plane signaling connection to the AMF through a control plane interface N2, to implement functions such as radio access bearer control. The RAN may be any device having a radio transceiver function, and includes, but is not limited to, a 5G node base (5G node base, gNB), an evolved node base (eNB), a wireless access point (wireless access point, WiFi AP), a world interoperability for microwave access base station (world interoperability for microwave access base station, WiMAX BS), a transmission receiving point (transmission receiving point, TRP), a wireless relay node, a wireless backhaul node, and the like.

The access network device (i.e., network device in the access network) in the embodiments of this application may also be a device configured to communicate with the terminal device. The access network device may be a base transceiver station (base transceiver station, BTS) in a global system of mobile communication (global system of mobile communication, GSM) or code division multiple access (code division multiple access, CDMA), a nodeB (nodeB, NB) in a wideband code division multiple access (wideband code division multiple access, WCDMA) system, an evolved node base (eNB) in an LTE system, or a radio controller in a cloud radio access network (cloud radio access network, CRAN) scenario. Alternatively, the access network device may be a relay station, an access point, a vehicle-mounted device, a wearable device, an access network device in a future 5G network, or an access network device in a future evolved PLMN network, or the like. This is not limited in the embodiments of this application.

In the NR, functions of a base station are divided into two parts, known as centralized unit (centralized unit, CU)-distributed unit (distributed unit, DU) separation. From the perspective of a protocol stack, the CU includes an RRC layer and a PDCP layer of an LTE base station, and the DU includes a radio link control (radio link control, RLC) layer, a media access control (media access control, MAC) layer, and a physical (physical, PHY) layer of the LTE base station. In ordinary 5G node base deployment, the CU and the DU may be physically connected by using an optical fiber, and logically, there is a specially defined F1 interface used for communication between the CU and the DU. From the perspective of functions, the CU is mainly responsible for radio resource control and configuration, inter-cell mobility management, bearer management, and the like. The DU is mainly responsible for scheduling, and physical signal generation and sending.

The base station may be a macro base station, a micro base station, a pico base station, a small station, a relay station, a balloon station, or the like.

SMF: a control plane function mainly responsible for session management of a terminal device, which includes selection and control of a user plane function (user plane function, UPF), internet protocol (internet protocol, IP) address allocation, session QoS management, acquisition of a policy and charging control (policy and charging control, PCC) policy (from a PCF), and the like.

UPF: serving as an anchor point of a protocol data unit (protocol data unit, PDU) session connection, which is responsible for data message filtering, data transmission/forwarding, rate control, charging information generation, and the like of a terminal device, and providing a connection to a data network (data network, DN).

PCF: providing configuration policy information for a terminal device, and providing policy information for controlling a terminal device for a control plane network element (such as SMF) of the network; and generating a terminal device access strategy and a QoS flow control strategy.

IF: interacting with a network element of a core network to provide some services, for example, interacting with a PCF to perform service policy control, interacting with an NEF to obtain some network capability information or provide some application information for the network, and providing some data network access point information for a PCF to generate corresponding routing information of a data service.

The terminal device in the embodiments of this application is connected to a RAN device in a wireless manner, and a RAN network element is connected to a 5GC device in a wireless or wired manner. The 5GC device and the RAN network element may be different physical devices that are independent of each other, or functions of the 5GC device and logical functions of the RAN network element may be integrated into a same physical device, or some functions of the 5GC device and some functions of the RAN network element may be integrated into one physical device. The terminal device may be located at a fixed position, or may be mobile.

The 5GC device mainly includes the foregoing PCF network element, SMF network element, UPF network element, and the like.

It should be noted that the foregoing "network element" may also be referred to as an entity, a device, an apparatus, a module, or the like, which is not specifically limited in this application. In addition, in this application, for ease of understanding and description, the description of the "network element" is omitted in some of the descriptions. For example, an NEF network element is briefly referred to as an NEF. In this case, the "NEF" should be understood as an NEF network element or an NEF entity. Descriptions of same or similar cases are omitted below.

It should be noted that the name of each network element included in FIG. 1 is only a name, and the name does not limit functions of the network element. In a 5G network and other future networks, the foregoing network elements may also have other names. This is not specifically limited in the embodiments of this application. For example, in a 6G network, some or all of the foregoing network elements may follow the terminology used in 5G, or may be given different names, etc., which is explained in a unified way here and will not be repeated below.

It should be noted that the network elements in FIG. 1 do not need to exist at the same time, and which network elements are needed may be determined according to requirements. The connection relationships between the network elements in FIG. 1 are not uniquely determined, and may be adjusted according to requirements.

It can be understood that the foregoing network element or function may be a network element in a hardware device, a software function running on dedicated hardware, or a virtualization function instantiated on a platform (for example, a cloud platform).

Certainly, FIG. 1 is merely an exemplary description of a network architecture of a communication system, and does not limit the network architecture of the communication system in the embodiments of this application.

### [Terminal Device]

The terminal device may be a device having a transceiver function, and may also be referred to as a terminal, a user equipment (user equipment, UE), a remote UE (remote UE), a relay UE (relay UE), an access terminal device, a user unit, a user station, a mobile station, a remote station, a mobile device, a user terminal device, an intelligent terminal device, a wireless communication device, a user agent, or a user apparatus. It should be noted that the relay UE is a terminal device that can provide a relay forwarding service for another terminal device (including the remote UE).

For example, the terminal device may be a mobile phone (mobile phone), a pad (Pad), a computer with a wireless transceiver function, a virtual reality (virtual reality, VR) terminal device, an augmented reality (augmented reality, AR) terminal device, a wireless terminal device in industrial control (industrial control), a wireless terminal device in self-driving, a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

For another example, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function or another processing device connected to a wireless modem, a vehicle-mounted device, a wearable device, a terminal device in a next generation communication system (such as an NR communication network and a 6G communication system), a terminal device in a future evolved public land mobile network (public land mobile network, PLMN), or the like, which is not specifically limited.

Optionally, the terminal device may be deployed on land, including indoors or outdoors, handheld, wearable, or vehicle-mounted; or may be deployed on water (for example, a ship); or may be deployed in air (for example, an airplane, a balloon, or a satellite).

Optionally, the terminal device may include an apparatus having a wireless communication function, for example, a chip system, a chip, or a chip module. Exemplarily, the chip system may include a chip, and may also include another discrete component.

Optionally, the terminal device in the embodiments of this application may be a chip, a chip module, an apparatus, a unit, or the like, which is not specifically limited.

### [Network Device]

The network device may be a device having a transceiver function, and may be configured to communicate with a terminal device.

Optionally, the network device may be responsible for radio resource management (radio resource management, RRM), quality of service (quality of service, QoS) management, data compression and encryption, data receiving and sending, and the like on an air interface side.

Optionally, the network device may include a base station (base station, BS) in a communication system or a device deployed in a radio access network (radio access network, RAN) and configured to provide a wireless communication function. That is, the network device may include a device in the RAN.

For example, the device in the RAN may include an evolved node B (eNB, or eNodeB) in the LTE communication system, a next generation evolved node B (next generation evolved node B, ng-eNB) in the NR communication system, a next generation node B (next generation node B, gNB) in the NR communication system, a master node (master node, MN) in a dual connectivity architecture, a second node or a secondary node (secondary node, SN) in the dual connectivity architecture, or the like, which is not specifically limited.

Optionally, the network device may include a device in a core network (core network, CN).

For example, the device in the CN may include an AMF, a UPF, an SMF, and the like.

Optionally, the network device may also be an access point (access point, AP) in a WLAN, a relay station, a communication device in a future evolved PLMN network, a communication device in an NTN network, or the like.

Optionally, the network device may include an apparatus that provides a wireless communication function for the terminal device, such as a chip system, a chip, or a chip module. Exemplarily, the chip system may include a chip, or may include another discrete component.

Optionally, the network device may be a transmission and reception point (transmission and reception point, TRP).

Optionally, the network device may communicate with an Internet Protocol (Internet Protocol, IP) network, for example, the internet (internet), a private IP network, or another data network.

Optionally, the network device may include one independent node to implement functions of the base station, or may include two or more independent nodes to implement functions of the base station. For example, the network device includes a centralized unit (centralized unit, CU) and a distributed unit (distributed unit, DU), such as gNB-CU and gNB-DU. Further, in some other embodiments, the network device may further include an active antenna unit (active antenna unit, AAU). The CU implements some functions of the network device, and the DU implements the other functions of the network device. For example, the CU is responsible for processing non-real-time protocols and services to implement functions of a radio resource control (RRC) layer, a service data adaptation protocol (service data adaptation protocol, SDAP) layer, and a packet data convergence protocol (packet data convergence protocol, PDCP) layer. The DU is responsible for processing physical layer protocols and real-time services to implement functions of a radio link control (radio link control, RLC) layer, a media access control (MAC) layer, and a physical (physical, PHY) layer. In addition, the AAU may implement some physical layer processing functions, and radio frequency processing and active antenna related functions. Because information at the RRC layer eventually becomes information at the PHY layer or is converted from information at the PHY layer, in this network deployment, higher layer signaling (for example, RRC signaling) may be considered as being generated by the CU, sent by the DU, or sent by the DU and the AAU. It can be understood that the network device may include at least one of a CU, a DU, and an AAU. In addition, the CU may be classified as a RAN device, or the CU may be classified as a core network device. This is not specifically limited.

Optionally, the network device may be any one of a plurality of stations that perform coherent joint transmission (coherent joint transmission, CJT) with the terminal device, or may be a station other than the plurality of stations, or may be another network device that performs network communication with the terminal device, which is not specifically limited. The multi-station coherent joint transmission may be joint coherent transmission of a plurality of stations, or sending of different data belonging to a same physical downlink shared channel (physical downlink shared channel, PDSCH) to the terminal device from different stations, or transmission of one station virtually formed from a plurality of stations, or joint transmission in another manner. The station in the multi-station coherent joint transmission may be a remote radio head (remote radio head, RRH), a transmission and reception point (transmission and reception point, TRP), a network device, or the like, which is not specifically limited.

Optionally, the network device may be any one of a plurality of stations that perform non-coherent joint transmission (non-coherent joint transmission, NCJT) with the terminal device, or may be a station other than the plurality of stations, or may be another network device that performs network communication with the terminal device, which is not specifically limited. The multi-station non-coherent joint transmission may be joint non-coherent transmission of a plurality of stations, or sending of different data belonging to a same PDSCH to the terminal device from different stations, or non-joint transmission in another manner. The station in the multi-station non-coherent joint transmission may be an RRH, a TRP, a network device, or the like, which is not specifically limited.

Optionally, the network device may provide services for a cell, and the terminal device in the cell may communicate with the network device by using transmission resources (for example, spectrum resources). The cell may be a macro cell (macro cell), a small cell (small cell), a metro cell (metro cell), a micro cell (micro cell), a pico cell (pico cell), a femto cell (femto cell), or the like.

Optionally, the network device in the embodiments of this application may be a chip, a chip module, an apparatus, a unit, or the like, which is not specifically limited.

### [NTN System]

The technical solutions of the embodiments of this application may be applied to an NTN system, such as a satellite communication system. For a satellite communication system, generally, a network device communicates with a ground terminal device by using a satellite.

Currently, the 5G NR has reached a commercial deployment stage from a standardization stage. The NR standard is researched and designed for characteristics of terrestrial communication, and provides high-rate, high-reliability, and low-delay communication for a user terminal. Compared with a terrestrial communication system, the NTN system has characteristics such as large coverage area and flexible networking.

The NTN system includes networking by using devices such as an unmanned aerial vehicle, a high altitude platform station (HAPS), and a satellite, and provides services such as data transmission and voice communication for the terminal device. The height of the high altitude platform station device is usually 8 km to 50 km from the ground. Satellite communication systems may be classified into the following three types according to an orbit height of a satellite: a geostationary earth orbit (geostationary earth orbit, GEO) satellite communication system, also referred to as a synchronous orbit satellite system, a medium earth orbit (medium earth orbit, MEO) satellite communication system, and a low earth orbit (low earth orbit, LEO) satellite communication system.

The satellite may be a spacecraft of a transparent payload (transparent payload) (or referred to as a bent pipe payload (bent pipe payload)) or regenerative payload (regenerative payload) signal transmitter, that is, a transparent satellite (transparent satellite) or a regenerative satellite (regenerative satellite).

The satellite may be classified into a transparent (transparent) (or referred to as a bent pipe payload (bent pipe payload)) mode and a regenerative (regenerative) mode according to an operating mode or a payload (payload).

When the satellite operates in a transparent mode, the satellite is a spacecraft of a transparent payload signal transmitter, and has relay and forwarding functions.

When the satellite operates in a regenerative mode, the satellite has a data processing capability, and has functions of a base station (such as a gNB) or some functions of a base station function. In this case, the satellite may be considered as a base station.

It should be noted that the satellites may be classified into a GEO satellite, an MEO satellite, an LEO satellite, a high elliptical orbit (high elliptical orbit, HEO) satellite, and the like according to different heights of the operating orbits.

An orbit height of a GEO satellite is 35786 km, and main advantages of the GEO satellite are that the GEO satellite can keep static relative to the ground and provide a large coverage area. However, GEO satellite communication also has significant disadvantages:
1) The orbit of the GEO satellite is far away from the earth, resulting in significant freespace propagation losses and making communication link budgets tight. To increase the transmission/reception gain, an antenna with a large aperture needs to be equipped for the satellite.
2) The communication transmission delay is high, reaching approximately 500 ms roundtrip delay, which fails to satisfy the requirements of real-time services.
3) GEO orbit resources are relatively scarce, have high transmission costs, and cannot provide coverage for the polar regions.

An orbit height of an MEO satellite ranges from 2000 km to 35786 km. The advantage of the MEO satellite is that global coverage can be achieved by using a relatively small quantity of satellites. However, the orbit height of the MEO satellite is higher than that of an LEO satellite, and the transmission delay is still relatively large compared with LEO satellite communication. Considering the advantage and disadvantages of MEO satellite communication, the MEO satellite is mainly applied to positioning and navigation.

An orbit height of an LEO satellite ranges from 300 km to 2000 km. The orbit height of the LEO satellite is lower than that of an MEO satellite and a GEO satellite. The LEO satellite has the advantages of small data propagation delay, small transmission loss, and lower transmission costs. Therefore, LEO satellite communication has attracted wide attention in recent years.

An orbit height of an HEO satellite ranges from 400 km to 50000 km.

A non-terrestrial network gateway (NTN gateway) may be an earth station or gateway located on the ground, and can provide sufficient radio frequency (radio frequency, RF) power and RF sensitivity, to implement a connection between a terrestrial device (such as a network device) and a satellite. The non-terrestrial network gateway is a node of a transport network layer (transport network layer, TNL).

Exemplarily, an NTN system according to an embodiment of this application is shown in FIG. 2. The NTN communication system 20 may include a terminal device 210, a satellite 220, a non-terrestrial network gateway 230, and a core network device 240. A communication link between the terminal device 210 and the satellite 220 is referred to as a service link (service link). A communication link between the satellite 220 and the non-terrestrial network gateway 230 is referred to as a feeder link (feeder link). The satellite 220 and the non-terrestrial network gateway 230 may form an access network device (for example, a gNB), and the core network device 240 may be an AMF/UPF.

The communication system has been described above, and joint downlink channel estimation in this embodiment is specifically described below.

Some communication systems (for example, an NTN system) may have limited downlink coverage. In the limited downlink coverage, phenomena such as poor downlink signal quality, low channel estimation accuracy, and poor transmission quality may exist. To improve downlink transmission quality of the communication system, this embodiment proposes performing joint downlink channel estimation on the communication system, so as to obtain more accurate downlink channel information through the joint downlink channel estimation, obtain better detection performance, and implement downlink coverage enhancement.

The joint downlink channel estimation may be a method of performing channel estimation by jointly using physical downlink control channel (physical downlink control channel, PDCCH)/physical downlink shared channel (PDSCH) demodulation reference signals (demodulation reference signals, DM-RSs) of a plurality of time units, so as to obtain more accurate downlink channel information, improve downlink channel estimation accuracy, improve demodulation performance of downlink signals, and enhance coverage performance of downlink channels. Channel estimation by jointly using PDCCH/PDSCH DM-RSs of a plurality of time units may be referred to as PDCCH/PDSCH DM-RS bundling (bundling).

It should be noted that the time unit may refer to a communication granularity in time domain. In this way, the terminal device and the network device may communicate with each other in time units in the time domain. For example, the time unit may be a subframe, a slot, an OFDM symbol, a mini-slot, or the like, which is not specifically limited.

In an example in which the time unit is a slot, the joint downlink channel estimation may be a method of performing channel estimation by jointly using PDCCH/PDSCH DM-RSs of a plurality of slots. In this case, the PDCCH/PDSCH DM-RS bundling is channel estimation by jointly using PDCCH/PDSCH DM-RSs of a plurality of slots.

During joint downlink channel estimation, the network device may indicate, to the terminal device through signaling, an enable (enable) or disable (disable) state of PDCCH/PDSCH DM-RS bundling in a downlink transmission process. Enabling of PDCCH/PDSCH DM-RS bundling may mean that the network device allows/expects to perform PDCCH/PDSCH DM-RS bundling. Disabling of PDCCH/PDSCH DM-RS bundling may mean that the network device does not allow/expect to perform PDCCH/PDSCH DM-RS bundling.

Certainly, the terminal device may also report whether the terminal device supports PDCCH/PDSCH DM-RS bundling to the network device.

When joint downlink channel estimation is supported, in this embodiment, a duration of PDCCH/PDSCH DM-RS bundling may be introduced.

It should be noted that the duration may be used for grouping time units, to confirm which time units' PDCCH/PDSCH DM-RSs may be bundled together. Time units in a same duration may be considered as a same group. PDCCH/PDSCH DM-RSs of time units in the same group may be bundled together for channel estimation, and PDCCH/PDSCH DM-RSs of time units in different groups are not bundled.

In this way, the terminal device may perform joint downlink channel estimation according to PDCCH/PDSCH DM-RSs of a plurality of time units in the duration.

It should be noted that some terminal devices may need to perform joint downlink channel estimation, and some other terminal devices may not need to perform joint downlink channel estimation. This is because for terminal devices that have poor channel quality (for example, the quality of the received signal (such as RSRP, RSRQ, or SINR) of the terminal devices is less than the preset threshold) with the network device, these terminal devices cannot obtain accurate downlink channel information due to the poor channel quality, so these terminal devices may need to perform joint downlink channel estimation; but for terminal devices that have good channel quality (for example, the quality of the received signal of the terminal devices is greater than the preset threshold) with the network device, these terminal devices can obtain accurate downlink channel information due to the good channel quality, so these terminal device may not need to perform joint downlink channel estimation.

In addition, the carrier that is sent by the network device in the duration and is used for carrying the PDCCH/PDSCH satisfies the requirements for power consistency and phase continuity. In other words, the terminal device may consider that the carrier that is sent by the network device in the duration and is used for carrying the PDCCH/PDSCH satisfies the requirements for power consistency and phase continuity.

"The carrier that is used for carrying the PDCCH/PDSCH satisfies power consistency" can be understood as that a maximum allowed power difference of the carrier between any two of the time units of the PDCCH/PDSCH DM-RS bundling cannot exceed a particular threshold.

"The carrier that is used for carrying the PDCCH/PDSCH satisfies phase continuity" can be understood as that a maximum allowed phase difference of the carrier between any two of the time units of the PDCCH/PDSCH DM-RS bundling cannot exceed a particular threshold.

In addition, the duration of PDCCH/PDSCH DM-RS bundling may be represented by a time domain window (time domain window, TDW) length (length). That is, the carrier that is sent by the network device in the TDW and is used for carrying the PDCCH/PDSCH satisfies the requirements for power consistency and phase continuity. In other words, the terminal device may consider that the carrier that is sent by the network device in the TDW and is used for carrying the PDCCH/PDSCH satisfies the requirements for power consistency and phase continuity. Certainly, the duration may alternatively be represented by another parameter (such as a running time of a timer), which is not specifically limited.

For ease of description, in the following embodiment, a periodic TDW and an aperiodic TDW are separately described in an example of a TDW in which PDCCH/PDSCH DM-RSs are bundled.

### [Solution 1]

In "Solution 1", this embodiment introduces a periodic TDW. The network device may configure a periodic TDW to the terminal device through signaling.

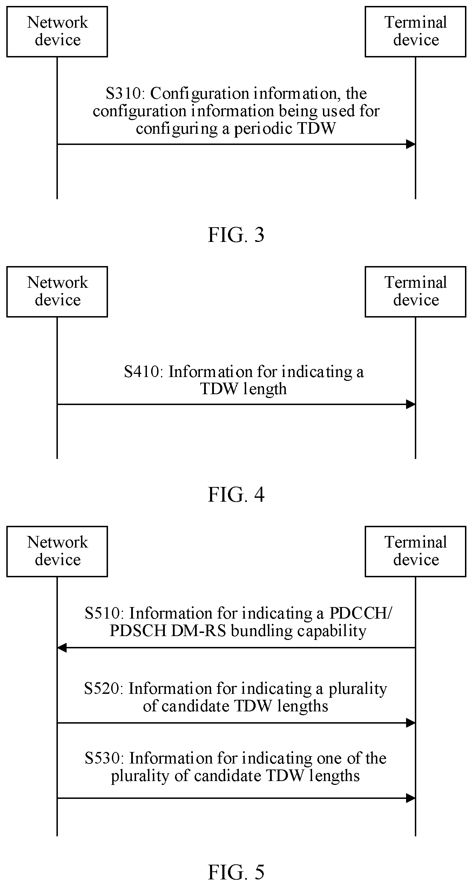

For example, in an example of interaction between the network device and the terminal device, FIG. 3 is a schematic flowchart of a communication method according to this embodiment, which specifically includes the following step:
S310: The network device sends configuration information, the configuration information being used for configuring a periodic TDW.

Correspondingly, the terminal device receives the configuration information.

In this way, the configuration of the periodic TDW is implemented by using the configuration information. The configuration information may be carried by system information (for example, a system information block (system information block, SIB)), radio resource control (radio resource control, RRC) signaling, medium access control (medium access control, MAC) signaling (for example, an MAC control element (MAC control element, MAC CE)), downlink control information (downlink control information, DCI), or the like. In addition, the configuration process may be completed in processes such as cell search, cell camping, cell synchronization, random access, cell handover, cell reselection, or resource scheduling.

It should be noted that Solution 1 may be applied to an NTN system. In addition, the network device mentioned in Solution 1 may include an access network device (including a non-terrestrial network gateway and a satellite) in the NTN.

During specific implementation, in a periodic TDW configuration process, the network device may configure, to the terminal device through signaling/signals/information/channels, at least one of a TDW length, a TDW period, or a TDW start position. The TDW length, the TDW period, and the TDW start position may be configured together by using the same signaling/signal/information/channel, or may be separately configured by using different signaling/signals/information/channels. Specific descriptions are provided below.

### "TDW length"

The TDW length may be understood as the length/time/duration of a TDW in time domain.

It should be noted that in "Solution 1", the TDW length may refer to the length of a periodic TDW.

Optionally, the TDW length may be in absolute time. The absolute time may refer to seconds (s), milliseconds (ms), microseconds, or the like. For example, the time domain window length is 1 ms, 1 s, or the like.

Optionally, the TDW length may be in relative time. The relative time may refer to a quantity of system frames (system/radio frames), a quantity of subframes, a quantity of slots, a quantity of symbols (for example, orthogonal frequency division multiplexing (orthogonal frequency division multiplexing, OFDM) symbols), or the like. For example, the time domain window length is a plurality of slots, a plurality of symbols, or the like. The following uses the 5G NR as an example to describe respective lengths of a system frame, a subframe, a slot, and an OFDM symbol.

Transmission numerologies (transmission numerologies) supported by the 5G NR are shown in Table 1. In Table 1, *µ* represents a sub-carrier spacing configuration of a downlink bandwidth part (downlink bandwidth part, DL BWP), and Δ*f* represents a sub-carrier spacing.

**Table 1**

| *µ* | Δ*f* = 2*^{µ}*·15 [kHz] | Cyclic prefix (cyclic prefix) |
|---|---|---|
| 0 | 15 | Normal (Normal) |
| 1 | 30 | Normal |
| 2 | 60 | Normal, Extended (Extended) |
| 3 | 120 | Normal |
| 4 | 240 | Normal |
| 5 | 480 | Normal |

| *µ* | Δ*f* = 2*^{µ}* ·15 [kHz] | Cyclic prefix (cyclic prefix) |
|---|---|---|
| 6 | 960 | Normal |

In the 5G NR, the length of one system frame may be 10 ms, one system frame includes 10 subframes, and the length of each subframe is 1 ms. For a normal cyclic prefix (normal cyclic prefix, NCP), the quantity of slots in each system frame, the quantity of OFDM symbols in each slot, and the quantity of slots in each subframe are shown in Table 2. In Table 2, ${N}_{symb}^{slot}$ represents the quantity of OFDM symbols in each slot, ${N}_{slot}^{frame , μ}$ represents the quantity of slots in each system frame under the sub-carrier spacing configuration *µ*, and ${N}_{slot}^{subframe , μ}$ represents the quantity of slots in each subframe under the sub-carrier spacing configuration *µ*. In this way, for *µ* = 0, the length of each slot is 1 ms, and the length of each OFDM symbol is 66.67 ms, and the rest can be known by analogy.

**Table 2**

| *µ* | ${N}_{symb}^{slot}$ | ${N}_{slot}^{frame , μ}$ | ${N}_{slot}^{subframe , μ}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

Optionally, the TDW length is predetermined by a protocol.

Optionally, the TDW length is explicitly configured.

For example, in an example of interaction between the network device and the terminal device, FIG. 4 is a schematic flowchart of another communication method according to this embodiment, which specifically includes the following step:
S410: The network device sends information for indicating a TDW length.

Correspondingly, the terminal device receives the information.

In this way, explicit configuration of the TDW length is implemented by using the information. The information may be carried by an SIB, RRC signaling, an MAC CE, DCI, or the like.

For another example, in an example of interaction between the network device and the terminal device, FIG. 5 is a schematic flowchart of another communication method according to this embodiment, which specifically includes the following steps:
S510: The terminal device sends information for indicating a PDCCH/PDSCH DM-RS bundling capability.

Correspondingly, the network device receives the information.

The PDCCH/PDSCH DM-RS bundling capability includes a TDW length supported by the terminal device.

In this way, the network device is notified of the TDW length supported by the terminal device by using the information, so as to assist the network device in configuring the TDW length.

S520: The network device sends information for indicating a plurality of candidate TDW lengths.

Correspondingly, the terminal device receives the information.

In this way, explicit configuration of the plurality of candidate TDW lengths is implemented by using the information. The information may be carried by an SIB, RRC signaling, an MAC CE, DCI, or the like.

S530: The network device sends information for indicating one of the plurality of candidate TDW lengths.

Correspondingly, the terminal device receives the information.

The information may be carried by an SIB, RRC signaling, an MAC CE, DCI, or the like.

In this way, explicit configuration of the TDW length is implemented by using the information.

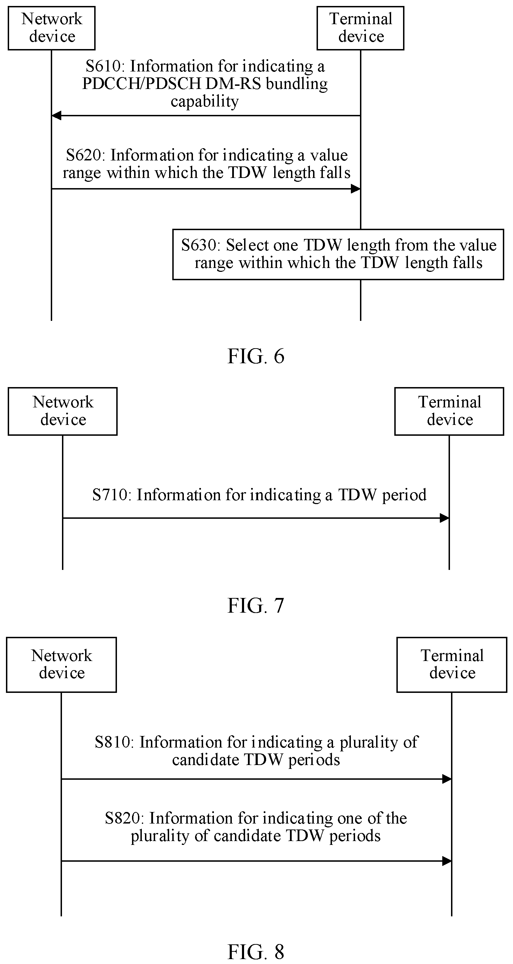

For another example, in an example of interaction between the network device and the terminal device, FIG. 6 is a schematic flowchart of another communication method according to this embodiment, which specifically includes the following steps:
S610: The terminal device sends information for indicating a PDCCH/PDSCH DM-RS bundling capability.

Correspondingly, the network device receives the information.

The PDCCH/PDSCH DM-RS bundling capability includes a TDW length supported by the terminal device.

In this way, the network device is notified of the TDW length supported by the terminal device by using the information, so as to assist the network device in configuring the TDW length.

S620: The network device sends information for indicating a value range within which the TDW length falls.

Correspondingly, the terminal device receives the information.

In this way, explicit configuration of the value range within which the TDW length falls is implemented by using the information. The information may be carried by an SIB, RRC signaling, an MAC CE, DCI, or the like.

S630: The terminal device selects one TDW length from the value range within which the TDW length falls.

In this way, the terminal device may select one TDW length according to the capability or requirement of the terminal device.

Optionally, the TDW length selected by the terminal device does not exceed the network-configured or indicated TDW length.

Optionally, after S630, the terminal device sends information for indicating the selected TDW length. Correspondingly, the network device receives the information.

In this way, the TDW length selected by the terminal device is reported to the network device by using the information, so that the network device learns a selection result of the terminal device. The information may be carried by an MAC CE, UCI, or the like.

An example of explicitly configuring the TDW length has been described above with reference to FIG. 4 to FIG. 6. This embodiment is not limited thereto. In another example, the TDW length is implicitly configured.

**Table 3**

| Number of times of PDCCH/PDSCH repeated transmission | TDW length (unit: slot) |
|---|---|
| 2, 4 | 2 |
| 8, 12 | 4 |
| 16, 20 | 8 |
| ... | ... |

For example, in this embodiment, an association relationship/mapping relationship between the number of times of PDCCH/PDSCH repeated transmission and the TDW length may be established. Different numbers of times of PDCCH/PDSCH repeated transmission may be associated with different TDW lengths. As shown in Table 3, in Table 3, when the number of times of PDCCH/PDSCH repeated transmission is 2 or 4, the TDW length is 2 slots, and the rest can be known by analogy. As can be seen, when the network device configures the number of times of PDCCH/PDSCH repeated transmission to the terminal device through signaling, the terminal device may determine the TDW length according to the number of times of PDCCH/PDSCH repeated transmission and the foregoing association relationship/mapping relationship, thereby implementing implicit configuration of the TDW length.

For another example, in this embodiment, an association relationship/mapping relationship between the beam/SSB and the TDW length may be established. Different beams/SSBs may be associated with different TDW lengths, or different beam groups/SSB groups may be associated with different TDW lengths. Such an association relationship/mapping relationship may be configured by the network device to the terminal device through signaling, or may be stipulated by a communication standard protocol and preset in the terminal device and the network device.

It should be noted that in the NTN system, one satellite cell may include a plurality of beams, different beams are associated with different SSB indexes (index), and different beams have different coverage areas. Therefore, in this embodiment, an association relationship between the beam/SSB and the TDW length may be established. It is assumed that one cell corresponds to 8 beams (that is, 8 SSBs), and each beam is associated with one SSB index. The association relationship/mapping relationship between the SSB indexes and the TDW length is shown in Table 4. In Table 4, the TDW length associated with SSB1 and SSB2 is 2 slots, the TDW length associated with SSB3 and SSB4 is 4 slots, the TDW length associated with SSB5 and SSB6 is 6 slots, and the TDW length associated with SSB7 and SSB8 is 8 slots. In this way, when the beam used by the terminal device is associated with SSB3, the terminal device may determine the TDW length according to the foregoing association relationship/mapping relationship, thereby implementing implicit configuration of the TDW length.

**Table 4**

| SSB index | TDW length (unit: slot) |
|---|---|
| 1, 2 | 2 |
| 3, 4 | 4 |
| 5, 6 | 6 |
| 7, 8 | 8 |

### "TDW period"

The TDW period may be understood as an interval between TDWs in time domain.

It should be noted that in "Solution 1", the TDW period refers to the period of a periodic TDW.

Optionally, the TDW period may be in absolute time. The absolute time may refer to seconds (s), milliseconds (ms), or the like. For example, the TDW period is 10 ms, 10 s, or the like.

Optionally, the TDW period may be in relative time. The relative time may refer to a quantity of system frames, a quantity of subframes, a quantity of slots, a quantity of symbols (for example, OFDM symbols), or the like. For example, the TDW period is a plurality of slots, a plurality of symbols, or the like.

Optionally, the TDW period is predetermined by a protocol.

Optionally, the TDW period is explicitly configured.

For example, in an example of interaction between the network device and the terminal device, FIG. 7 is a schematic flowchart of another communication method according to this embodiment, which specifically includes the following step:
S710: The network device sends information for indicating a TDW period.

Correspondingly, the terminal device receives the information.

In this way, explicit configuration of the TDW period is implemented by using the information. The information may be carried by an SIB, RRC signaling, an MAC CE, DCI, or the like.

For another example, in an example of interaction between the network device and the terminal device, FIG. 8 is a schematic flowchart of another communication method according to this embodiment, which specifically includes the following steps:
S810: The network device sends information for indicating a plurality of candidate TDW periods.

Correspondingly, the terminal device receives the information.

In this way, explicit configuration of the plurality of candidate TDW periods is implemented by using the information. The information may be carried by an SIB, RRC signaling, an MAC CE, DCI, or the like.

In addition, to assist configuration of the network, before the network device delivers the information, the terminal device may report a PDCCH/PDSCH DM-RS bundling capability of the terminal device to the network device. The PDCCH/PDSCH DM-RS bundling capability includes a TDW period supported by the terminal device.

S820: The network device sends information for indicating one of the plurality of candidate TDW periods.

Correspondingly, the terminal device receives the information.

In this way, explicit configuration of the TDW period is implemented by using the information. The information may be carried by an SIB, RRC signaling, an MAC CE, DCI, or the like.

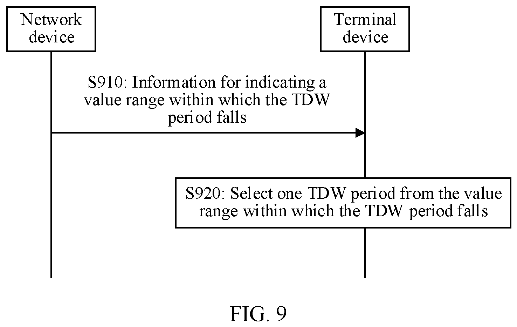

For another example, in an example of interaction between the network device and the terminal device, FIG. 9 is a schematic flowchart of another communication method according to this embodiment, which specifically includes the following steps:
S910: The network device sends information for indicating a value range within which the TDW period falls.

Correspondingly, the terminal device receives the information.

In this way, explicit configuration of the value range within which the TDW period falls is implemented by using the information. The information may be carried by an SIB, RRC signaling, an MAC CE, DCI, or the like.

S920: The terminal device selects one TDW period from the value range within which the TDW period falls.

In this way, the terminal device may select one TDW period according to the capability or requirement of the terminal device.

Optionally, after S920, the terminal device sends information for indicating the selected TDW period. Correspondingly, the network device receives the information.

In this way, the TDW period selected by the terminal device is reported to the network device by using the information, so that the network device learns a selection result of the terminal device. The information may be carried by an MAC CE, UCI, or the like.

An example of explicitly configuring the TDW period has been described above with reference to FIG. 7 to FIG. 9. This embodiment is not limited thereto. In another example, the TDW period is implicitly configured.

For example, in this embodiment, an association relationship/mapping relationship between the number of times of PDCCH/PDSCH repeated transmission, the TDW length, or the beam and the TDW period may be established. The association relationship/mapping relationship may be similar to Table 3 or Table 4 above, and details are not described herein again.

In this way, the terminal device may determine the TDW period according to the number of times of PDCCH/PDSCH repeated transmission, the TDW length, or the beam and the foregoing association relationship/mapping relationship, thereby implementing implicit configuration of the TDW period.

### "TDW start position"

The TDW start position may be understood as the start resource position of a TDW in time domain.

It should be noted that in "Solution 1", the TDW start position may refer to the start position of a periodic TDW.

Optionally, the TDW start position may be an absolute moment. The absolute moment may be represented by using universal time coordinated (universal time coordinated, UTC), China standard time (China standard time, CST), Greenwich mean time (greenwich mean time, GMT), or the like.

For example, the network device may deliver signaling (for example, SIB/RRCsignaling/MAC CE/DCI) to the terminal device. The signaling indicates that the TDW start position is 9:30:15 on January 8, 2024. In this way, network configuration of the TDW start position in an absolute moment is implemented through signaling.

Optionally, the TDW start position may be a relative moment. The relative moment may use a system frame number (system frame number, SFN), a subframe number, a slot number, a symbol number, or the like. The following uses the 5G NR as an example to describe the system frame number, the subframe number, the slot number, and the OFDM symbol number.

In the 5G NR, the system frame numbers are 0 to 1023, and one system frame includes 10 subframes, with subframe numbers 0 to 9. For a normal cyclic prefix, when *µ* = 0, one system frame includes 10 slots, with slot numbers 0 to 9, and one slot includes 14 OFDM symbols, with OFDM symbol numbers 0 to 13.

For example, the network device may deliver signaling (for example, SIB/RRCsignaling/MAC CE/DCI) to the terminal device. The signaling indicates that the TDW start position is slot number 2 in system frame number 1. In this way, network configuration of the TDW start position in a relative moment is implemented through signaling.

Optionally, the TDW start position may be determined according to an offset (offset). The offset may represent an interval between a certain time domain position and the TDW start position in time domain. The time domain position may use a system frame with a particular number, a subframe with a particular number, a slot with a particular number, an OFDM symbol with a particular number, or the like. In this way, the terminal device may determine the TDW start position according to the time domain position and the offset.

It should be noted that the time domain position may satisfy one of the following cases:
Case 1: The time domain position may be a start position of a first system frame. In this way, the terminal device may determine the TDW start position according to the start position of the first system frame and the offset.
Case 2: The time domain position may be a receiving position of signaling for configuring the offset. It can be understood that the network device sends signaling for configuring the offset to the terminal device. Correspondingly, the terminal device receives the signaling. In this way, the terminal device may determine the TDW start position according to the receiving position of the signaling and the offset.

Optionally, a periodic TDW start position is determined according to the following equation: $\left(N⋅{n}_{f}+{n}_{s}-{T}_{offset}\right) mod {T}_{TDW} = 0 ;$
where *N* represents a quantity of time units in a system frame, *n_{f}* represents a system frame number, *nₛ* represents a time unit number in the system frame, *T*_{TDW} represents the TDW period, mod represents modulo, and *T_{offset}* represents an offset. *nₛ* satisfying the foregoing equation may be a time unit number of the periodic TDW start position. In this way, during configuration of the periodic TDW, the terminal device may determine the start position of each TDW according to the TDW period and the offset.

It should be noted that the time unit may refer to a communication granularity in time domain. In this way, the terminal device and the network device may communicate with each other in time units in the time domain. For example, the time unit may be a subframe, a slot, an OFDM symbol, a mini-slot, or the like, which is not specifically limited.

For example, in an example in which the time unit is slots, when the TDW length is in slots, the slot where the start position of each TDW is located satisfies the following equation: $\left({N}_{slot}^{frame , μ}{n}_{f}+{n}_{s , f}^{μ}-{T}_{offset}\right) mod \left({T}_{TDW}\right) = 0 ;$
where ${n}_{s , f}^{μ}$ represents a slot number in the system frame. ${n}_{s , f}^{μ}$ satisfying the foregoing equation may be a slot number of the TDW start position.

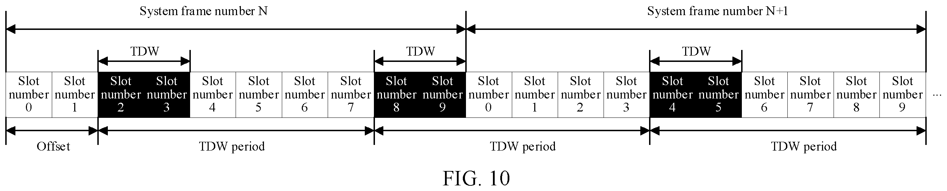

Distribution of the periodic TDWs in time domain is described below in an example where the TDW length is in slots, as shown in FIG. 10. In FIG. 10, the offset is 2 slots, the TDW length is 2 slots, and the TDW period is 6 slots. The first TDW includes slot number 2 and slot number 3 of system frame number N, the second TDW includes slot number 8 and slot number 9 of system frame number N, and the third TDW includes slot number 4 and slot number 5 of system frame number N+1.

Optionally, the offset is predetermined by a protocol.

Optionally, the offset is explicitly configured.

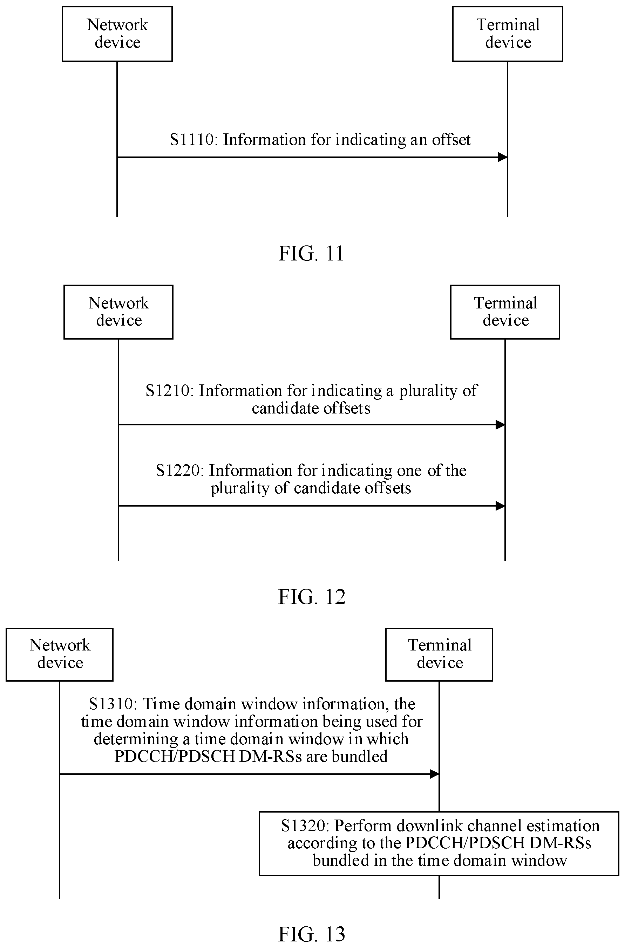

For example, in an example of interaction between the network device and the terminal device, FIG. 11 is a schematic flowchart of another communication method according to this embodiment, which specifically includes the following step:
S1110: The network device sends information for indicating an offset.

Correspondingly, the terminal device receives the information.

In this way, explicit configuration of the offset is implemented by using the information. The information may be carried by an SIB, RRC signaling, an MAC CE, DCI, or the like.

For another example, in an example of interaction between the network device and the terminal device, FIG. 12 is a schematic flowchart of another communication method according to this embodiment, which specifically includes the following steps:
S1210: The network device sends information for indicating a plurality of candidate offsets.

Correspondingly, the terminal device receives the information.

In this way, explicit configuration of the plurality of candidate offsets is implemented by using the information. The information may be carried by an SIB, RRC signaling, an MAC CE, DCI, or the like.

S1220: The network device sends information for indicating one of the plurality of candidate offsets.

Correspondingly, the terminal device receives the information.

In this way, explicit configuration of the TDW period is implemented by using the information. The information may be carried by an SIB, RRC signaling, an MAC CE, DCI, or the like.

An example of explicitly configuring the offset has been described above with reference to FIG. 11 or FIG. 12. This embodiment is not limited thereto. In another example, the offset is implicitly configured.

For example, in this embodiment, an association relationship between the number of times of PDCCH/PDSCH repeated transmission, the TDW length, the beam, or the TDW period and the offset may be established. The association relationship/mapping relationship may be similar to Table 3 or Table 4 above, and details are not described herein again.

In this way, the terminal device may determine the offset according to the number of times of PDCCH/PDSCH repeated transmission, the TDW length, the beam, or the TDW period, and the foregoing association relationship/mapping relationship, thereby implementing implicit configuration of the offset.

### "Expiration of periodic TDW"

It should be noted that after the network device configures the periodic TDW to the terminal device, the network device may further indicate expiration of the periodic TDW to the terminal device through signaling. In this way, the network device and the terminal device may stop using the periodic TDW.

### [Solution 2]

In "Solution 2", this embodiment introduces an aperiodic TDW. The network device may configure an aperiodic TDW to the terminal device through signaling.

For example, the network device may configure the aperiodic TDW to the terminal device through system information (for example, an SIB), RRC signaling, MAC signaling (for example, an MAC CE), or DCI. In addition, the configuration process may be completed in processes such as cell search, cell camping, cell synchronization, random access, cell handover, cell reselection, or resource scheduling.

It should be noted that Solution 2 may be applied to an NTN system. In addition, the network device mentioned in Solution 2 may include an access network device (including a non-terrestrial network gateway and a satellite) in the NTN.

During specific implementation, in an aperiodic TDW configuration process, the network device may configure a TDW length and/or a TDW start position to the terminal device through signaling. The TDW length and the TDW start position may be configured together by using the same signaling, or may be separately configured by using different signaling. Specific descriptions are provided below.

### "TDW length"

It should be noted that, for details about the content of the "TDW length" herein, reference may be made to the content of the "TDW length" in "Solution 1" above, and details are not described herein again. In addition, the TDW length in "Solution 2" may be the length of an aperiodic TDW.

### "TDW start position"

It should be noted that similar to the content of the "TDW start position" in "Solution 1" above, the TDW start position may be an absolute moment or a relative moment, and details are not described herein again. In addition, the TDW start position in "Solution 2" may refer to the start position of an aperiodic TDW.

Optionally, the TDW start position may be determined according to an offset. The offset may represent an interval between a certain time domain position and the TDW start position in time domain. The offset may be network-configured, preconfigured, stipulated by a communication standard protocol, or the like. The time domain position may use a system frame with a particular number, a subframe with a particular number, a slot with a particular number, an OFDM symbol with a particular number, or the like. In this way, the terminal device may determine the TDW start position according to the time domain position and the offset.

It should be noted that the time domain position may satisfy one of the following cases:
Case 1: The time domain position may be a receiving position of signaling for configuring the offset. It can be understood that the network device sends signaling for configuring the offset to the terminal device. Correspondingly, the terminal device receives the signaling. In this way, the terminal device may determine the TDW start position according to the receiving position of the signaling and the offset.
Case 2: The time domain position may be a receiving position of signaling for indicating an aperiodic TDW start or restart. It can be understood that the network device sends signaling for indicating an aperiodic TDW start or restart to the terminal device. Correspondingly, the terminal device receives the signaling. In this way, the terminal device may determine the TDW start position according to the position of the signaling and the offset. The offset is configured by another signaling or stipulated by a communication standard protocol.

For example, in an example where the offset is K1 slots, the network device sends DCI to the terminal device. The DCI is used for indicating an aperiodic TDW start or restart. Correspondingly, the terminal device receives the DCI at an n-th slot. In this way, the terminal device may determine that the TDW start position is the (n+K1)th slot.

Case 3: The time domain position may be a feedback position of a hybrid automatic repeat request-acknowledgement (hybrid automatic repeat request-acknowledgement, HARQ-ACK) corresponding to the signaling for indicating an aperiodic TDW start or restart. It can be understood that the network device sends signaling for indicating the aperiodic TDW start or restart to the terminal device. Correspondingly, the terminal device feeds back the HARQ-ACK corresponding to the signaling to the network device. In this way, the terminal device may determine the TDW start position according to the feedback position of the HARQ-ACK corresponding to the signaling and the offset. The offset is configured by another signaling or stipulated by a communication standard protocol.

For example, in an example where the offset is K2 slots, the network device sends an MAC CE to the terminal device. The MAC CE is used for indicating an aperiodic TDW start or restart. Correspondingly, the terminal device feeds back the HARQ-ACK corresponding to the MAC CE at an n-th slot. In this way, the terminal device may determine that the TDW start position is the (n+K2)th slot.

### [Communication Method]

With reference to the foregoing contents, the following describes, by way of example, yet another communication method according to an embodiment of this application. It should be noted that the terminal device may be a chip, a chip module, a communication module, or the like, and the network device may be a chip, a chip module, a communication module, or the like.

FIG. 13 is a schematic flowchart of yet another communication method according to an embodiment of this application, which specifically includes the following steps:
S1310: A network device sends time domain window information, the time domain window information being used for determining a time domain window in which PDCCH/PDSCH DM-RSs are bundled.

Correspondingly, a terminal device receives the time domain window information.

S1320: A terminal device performs downlink channel estimation according to the PDCCH/PDSCH DM-RSs bundled in the time domain window.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

Optionally, the time domain window information includes periodic time domain window information or aperiodic time domain window information.

In this way, in this application, a periodic time domain window can be determined by using the periodic time domain window information, so that channel estimation can be performed by jointly using the PDCCH/PDSCH DM-RSs of the time units in the periodic time domain window, thereby implementing periodic joint downlink channel estimation. Alternatively, in this application, an aperiodic time domain window can be determined by using the aperiodic time domain window information, so that channel estimation can be performed by jointly using the PDCCH/PDSCH DM-RSs of the time units in the aperiodic time domain window, thereby implementing aperiodic joint downlink channel estimation.

Optionally, the periodic time domain window information includes at least one of the following: a time domain window length, a time domain window period, or a time domain window start position. The aperiodic time domain window information includes a time domain window length and/or a time domain window start position.

In this way, in this application, the periodic time domain window can be determined according to the time domain window length, the time domain window period, or the time domain window start position, so as to implement periodic joint downlink channel estimation according to the periodic time domain window. Alternatively, in this application, the aperiodic time domain window can be determined according to the time domain window length and/or the time domain window start position, so as to implement aperiodic joint downlink channel estimation according to the aperiodic time domain window.

Optionally, the time domain window length is in absolute time, and the absolute time refers to seconds, milliseconds, or microseconds. In this way, in this application, the time domain window length may be defined by using the absolute time.

Optionally, the time domain window length is in relative time, and the relative time refers to a quantity of system frames, a quantity of subframes, a quantity of slots, or a quantity of symbols. In this way, in this application, the time domain window length may be defined by using the relative time.

Optionally, the time domain window length is determined by the terminal device according to network configuration information.

It should be noted that the network device may send network configuration information to the terminal device. The network configuration information is used for configuring the time domain window length. In this way, the terminal device can determine the time domain window length according to the network configuration information, so as to implement network configuration of the time domain window length.

Optionally, the time domain window length is determined by the terminal device from a plurality of network-configured candidate time domain window lengths according to network indication information.

It should be noted that the network device configures a plurality of candidate time domain window lengths to the terminal device, and then sends network indication information to the terminal device. The network indication information is used for indicating one time domain window length from the plurality of candidate time domain window lengths. In this way, the terminal device can determine the time domain window length according to the network indication information, so as to implement network configuration of the time domain window length.

Optionally, the time domain window length is selected by the terminal device from a network-configured first value range, and the first value range is a value range within which the time domain window length falls.

It should be noted that the network device configures a value range within which the time domain window length falls to the terminal device. Then, the terminal device may select, according to a capability or requirement of the terminal device, one time domain window length from the value range within which the time domain window length falls.

Certainly, the terminal device may report the time domain window length selected by the terminal device to the network device, so that the network device learns a selection result of the terminal device.

Optionally, the time domain window length is associated with a number of times of PDCCH/PDSCH repeated transmission.

It should be noted that in this application, the association relationship between the number of times of PDCCH/PDSCH repeated transmission and the time domain window length may be established. Different numbers of times of PDCCH/PDSCH repeated transmission may be associated with different time domain window lengths. In this way, when the network device configures the number of times of PDCCH/PDSCH repeated transmission to the terminal device through signaling, the terminal device can determine the time domain window length according to the number of times of PDCCH/PDSCH repeated transmission and the foregoing association relationship, so as to implement implicit configuration of the time domain window length.

Optionally, the time domain window length is associated with a beam or SSB.

It should be noted that in this application, the association relationship between the beam/SSB and the time domain window length may be established. Different beams/SSBs may be associated with different time domain window lengths, or different beam groups/SSB groups may be associated with different time domain window lengths. In this way, when the terminal device uses a certain beam or SSB, the terminal device can determine the time domain window length according to the beam or SSB and the foregoing association relationship, so as to implement implicit configuration of the time domain window length.

Optionally, the time domain window period is in absolute time, and the absolute time refers to seconds, milliseconds, or microseconds. In this way, in this application, the time domain window length may be defined by using the absolute time.

Optionally, the time domain window period is in relative time, and the relative time refers to a quantity of system frames, a quantity of subframes, a quantity of slots, or a quantity of symbols. In this way, in this application, the time domain window length may be defined by using the relative time.

Optionally, the time domain window period is determined by the terminal device according to network configuration information.

It should be noted that the network device may send network configuration information to the terminal device. The network configuration information is used for configuring the time domain window period. In this way, the terminal device can determine the time domain window period according to the network configuration information, so as to implement network configuration of the time domain window period.

Optionally, the time domain window period is determined by the terminal device from a plurality of network-configured candidate time domain window periods according to network indication information.

It should be noted that the network device configures a plurality of candidate time domain window periods to the terminal device, and then sends network indication information to the terminal device. The network indication information is used for indicating one time domain window period from the plurality of candidate time domain window periods. In this way, the terminal device can determine the time domain window period according to the network indication information, so as to implement network configuration of the time domain window period.

Optionally, the time domain window period is selected by the terminal device from a network-configured second value range, and the second value range is a value range within which the time domain window period falls.

It should be noted that the network device configures a value range within which the time domain window period falls to the terminal device. Then, the terminal device may select, according to a capability or requirement of the terminal device, one time domain window period from the value range within which the time domain window period falls.

Certainly, the terminal device may report the time domain window period selected by the terminal device to the network device, so that the network device learns a selection result of the terminal device.

Optionally, the time domain window period is associated with a number of times of PDCCH/PDSCH repeated transmission.

It should be noted that in this application, the association relationship between the number of times of PDCCH/PDSCH repeated transmission and the time domain window period may be established. Different numbers of times of PDCCH/PDSCH repeated transmission may be associated with different time domain window periods. In this way, when the network device configures the number of times of PDCCH/PDSCH repeated transmission to the terminal device through signaling, the terminal device can determine the time domain window period according to the number of times of PDCCH/PDSCH repeated transmission and the foregoing association relationship, so as to implement implicit configuration of the time domain window period.

Optionally, the time domain window period is associated with the time domain window length.

It should be noted that in this application, the association relationship between the time domain window length and the time domain window period may be established. Different time domain window lengths may be associated with different time domain window periods. In this way, when the network device configures the time domain window length to the terminal device through signaling, the terminal device can determine the time domain window period according to the time domain window length and the foregoing association relationship, so as to implement implicit configuration of the time domain window period.

Optionally, the time domain window period is associated with a beam or SSB.

It should be noted that in this application, the association relationship between the beam/SSB and the time domain window period may be established. Different beams/SSBs may be associated with different time domain window periods, or different beam groups/SSB groups may be associated with different time domain window periods. In this way, when the terminal device uses a certain beam or SSB, the terminal device can determine the time domain window period according to the beam or SSB and the foregoing association relationship, so as to implement implicit configuration of the time domain window period.

Optionally, the time domain window start position is an absolute moment, and the absolute moment is represented by universal time coordinated (UTC), China standard time (CST), or Greenwich mean time (GMT). In this way, in this application, the time domain window start position may be defined by using the absolute moment.

Optionally, the time domain window start position is a relative moment, and the relative moment is represented by a system frame number, a subframe number, a slot number, or a symbol number. In this way, in this application, the time domain window start position may be defined by using the relative moment.

Optionally, the time domain window start position is determined according to an offset, the offset indicates an interval between a first time domain position and the time domain window start position in time domain, and the first time domain position uses a system frame with a particular number, a subframe with a particular number, a slot with a particular number, or an OFDM symbol with a particular number.

In this way, in this application, the terminal device can determine the time domain window start position according to the offset and the first time domain position.

Optionally, the first time domain position is a start position of a first system frame. In this way, the terminal device may determine the time domain window start position according to the start position of the first system frame and the offset.

Optionally, the first time domain position is a receiving position of signaling for configuring the offset. It can be understood that the network device sends signaling for configuring the offset to the terminal device. Correspondingly, the terminal device receives the signaling. In this way, the terminal device may determine the time domain window start position according to the receiving position of the signaling and the offset.

Optionally, the first time domain position is a receiving position of signaling for indicating an aperiodic time domain window start or restart. It can be understood that the network device send signaling for indicating the aperiodic time domain window start or restart to the terminal device. Correspondingly, the terminal device receives the signaling. In this way, the terminal device can determine the time domain window start position according to the position of the signaling and the offset. The offset is configured by another signaling or stipulated by a communication standard protocol.

Optionally, the first time domain position is a feedback position of a HARQ-ACK corresponding to the signaling for indicating an aperiodic time domain window start or restart. It can be understood that the network device sends signaling for indicating the aperiodic time domain window start or restart to the terminal device. Correspondingly, the terminal device feeds back the HARQ-ACK corresponding to the signaling to the network device. In this way, the terminal device may determine the time domain window start position according to the feedback position of the HARQ-ACK corresponding to the signaling and the offset. The offset is configured by another signaling or stipulated by a communication standard protocol.

Optionally, a periodic time domain window start position is determined according to the following equation: $\left(N⋅{n}_{f}+{n}_{s}-{T}_{offset}\right) mod T = 0 ;$
where *N* represents a quantity of time units in a system frame, *n_{f}* represents a system frame number, *nₛ* represents a time unit number in the system frame, *T* represents the time domain window period, mod represents modulo, and *T_{offset}* represents an offset.

In this way, in this application, the terminal device can determine the time domain window start position according to the offset and the time domain window period.

Optionally, the offset is determined by the terminal device according to network configuration information.

It should be noted that the network device may send network configuration information to the terminal device. The network configuration information is used for configuring the offset. In this way, the terminal device can determine the offset according to the network configuration information, so as to implement network configuration of the offset.

Optionally, the offset is determined by the terminal device from a plurality of network-configured candidate offsets according to network indication information.

It should be noted that the network device configures a plurality of candidate offsets to the terminal device, and then sends network indication information to the terminal device. The network indication information is used for indicating one offset from the plurality of candidate offsets. In this way, the terminal device can determine the offset according to the network indication information, so as to implement network configuration of the offset.

Optionally, the offset is selected by the terminal device from a network-configured third value range, and the third value range is a value range within which the offset falls.

It should be noted that the network device configures a value range within which the offset falls to the terminal device. Then, the terminal device may select, according to a capability or requirement of the terminal device, one offset from the value range within which the offset falls.

Certainly, the terminal device may report the offset selected by the terminal device to the network device, so that the network device learns a selection result of the terminal device.

Optionally, the offset is associated with a number of times of PDCCH/PDSCH repeated transmission.

It should be noted that in this application, the association relationship between the number of times of PDCCH/PDSCH repeated transmission and the offset may be established. Different numbers of times of PDCCH/PDSCH repeated transmission may be associated with different offsets. In this way, when the network device configures the number of times of PDCCH/PDSCH repeated transmission to the terminal device through signaling, the terminal device can determine the offset according to the number of times of PDCCH/PDSCH repeated transmission and the foregoing association relationship, so as to implement implicit configuration of the offset.

Optionally, the offset is associated with the time domain window length.

It should be noted that in this application, the association relationship between the time domain window length and the offset may be established. Different time domain window lengths may be associated with different offsets. In this way, when the network device configures the time domain window length to the terminal device through signaling, the terminal device can determine the offset according to the time domain window length and the foregoing association relationship, so as to implement implicit configuration of the offset.

Optionally, the offset is associated with the time domain window period.

It should be noted that in this application, the association relationship between the time domain window period and the offset may be established. Different time domain window periods may be associated with different offsets. In this way, when the network device configures the time domain window period to the terminal device through signaling, the terminal device can determine the offset according to the time domain window period and the foregoing association relationship, so as to implement implicit configuration of the offset.

Optionally, the offset is associated with a beam or SSB.

It should be noted that in this application, the association relationship between the beam/SSB and the offset may be established. Different beams/SSBs may be associated with different offsets, or different beam groups/SSB groups may be associated with different offsets. In this way, when the terminal device uses a certain beam or SSB, the terminal device can determine the offset according to the beam or SSB and the foregoing association relationship, so as to implement implicit configuration of the offset.

Optionally, a carrier that is in the time domain window and is used for carrying PDCCH/PDSCH satisfies requirements for power consistency and phase continuity.

It should be noted that, the carrier that is sent by the network device in the time domain window and is used for carrying the PDCCH/PDSCH satisfies the requirements for power consistency and phase continuity. In other words, the terminal device may consider that the carrier that is sent by the network device in the time domain window and is used for carrying the PDCCH/PDSCH satisfies the requirements for power consistency and phase continuity.

Optionally, the performing downlink channel estimation according to the PDCCH/PDSCH DM-RSs bundled in the time domain window in S1320 includes: performing, by the terminal device, downlink channel estimation according to the PDCCH/PDSCH DM-RSs bundled in the time domain window when the quality of a received signal is less than a preset threshold.

It should be noted that some terminal devices may need to perform joint downlink channel estimation, and some other terminal devices may not need to perform joint downlink channel estimation. This is because for terminal devices that have poor channel quality (for example, the quality of the received signal (such as RSRP, RSRQ, or SINR) of the terminal devices is less than the preset threshold) with the network device, these terminal devices cannot obtain accurate downlink channel information due to the poor channel quality, so these terminal devices may need to perform joint downlink channel estimation; but for terminal devices that have good channel quality (for example, the quality of the received signal of the terminal devices is greater than the preset threshold) with the network device, these terminal devices can obtain accurate downlink channel information due to the good channel quality, so these terminal device may not need to perform joint downlink channel estimation.

In this way, when the quality of the received signal is less than the preset threshold, it indicates that the terminal device has poor channel quality with the network device. Therefore, the terminal device may perform joint downlink channel estimation according to the time domain window information, to obtain more accurate downlink channel information.

Optionally, before S1310, the terminal device sends information for indicating a PDCCH/PDSCH DM-RS bundling capability. The PDCCH/PDSCH DM-RS bundling capability includes at least one of the following: a time domain window length supported by the terminal device, a time domain window period supported by the terminal device, or a time domain window start position supported by the terminal device.

Correspondingly, the network device receives the information.

In this way, the network device is notified of the TDW length supported by the terminal device, the time domain window period supported by the terminal device, or the time domain window start position supported by the terminal device by using the information, so as to assist the network device in configuring the TDW length, the time domain window period, or the time domain window start position.

The foregoing describes the solutions in this embodiment of this application mainly from the perspective of a method side. The following describes, by way of example, functional units of a communication apparatus in this embodiment. It can be understood that, to implement the foregoing functions, the terminal device includes corresponding hardware structures and/or software modules for performing the functions. A person skilled in the art should be easily aware that units, algorithms, and steps in examples described with reference to embodiments disclosed in this specification can be implemented in this embodiment of this application by hardware or a combination of hardware and computer software. Whether a function is performed by hardware or computer software driving hardware depends on particular applications and design constraint conditions of the technical solutions. A person skilled in the art may use different methods to implement the described functions for each particular application, but this implementation should not be considered as falling outside the scope of this embodiment.

In this embodiment of this application, functional units of the terminal device may be divided according to the foregoing method example. For example, the division of the functional units may be implemented corresponding to the functions, or two or more functions may be integrated into one processing unit. The above integrated unit may be implemented in the form of hardware, or may be implemented in the form of a software program module. It should be noted that, in the embodiments of this application, the division of units is an example, and is merely logical function division, and other division manners may exist during actual implementation.

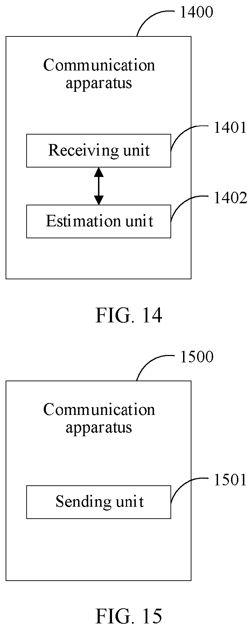

When integrated units are used, FIG. 14 is a composition block diagram of functional units of a communication apparatus according to an embodiment of this application. The communication apparatus 1400 includes a receiving unit 1401 and an estimation unit 1402.

Optionally, the receiving unit 1401 may be a modular unit configured to receive signals, information, and the like, which is not specifically limited.

Optionally, the estimation unit 1402 may be a modular unit configured to perform joint downlink channel estimation, which is not specifically limited.

Optionally, the communication apparatus 1400 may further include a storage unit, configured to store computer program codes or instructions executed by the communication apparatus 1400. The storage unit may be a memory.

Optionally, the communication apparatus 1400 may be a chip or a chip module.

Optionally, the receiving unit 1401 and the estimation unit 1402 may be integrated into a same unit, or may be integrated into different units.

For example, the receiving unit 1401 may be integrated into a communication unit, and the estimation unit 1402 may be integrated into a processing unit. The communication unit may be a communication interface, a transceiver, a transceiver circuit, or the like.

For another example, the receiving unit 1401 and the estimation unit 1402 may be integrated into a processing unit.

It should be noted that the processing unit may be a processor or a controller, for example, a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various exemplary logical blocks, modules, and circuits described with reference to contents disclosed in this embodiment. The processing unit may also be a combination for implementing a computing function, for example, a combination including one or more microprocessors, a combination of the DSP and the microprocessor.

Optionally, the communication apparatus 1400 is configured to execute any step or the like executed by a terminal device/chip/chip module or the like in the foregoing method embodiments.

During specific implementation, the receiving unit 1401 and the estimation unit 1402 are configured to execute any step in the foregoing method embodiments, and when executing an action such as sending, may optionally invoke another unit to complete a corresponding operation. Detailed descriptions are provided below.

The receiving unit 1401 is configured to receive time domain window information. The time domain window information is used for determining a time domain window in which PDCCH/PDSCH DM-RSs are bundled.

The estimation unit 1402 is configured to perform downlink channel estimation according to the PDCCH/PDSCH DM-RSs bundled in the time domain window.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

It should be noted that for specific implementation of each operation in the embodiment in FIG. 14, reference may be made to descriptions in the foregoing method embodiment, and details are not described herein again.

Optionally, the time domain window information includes periodic time domain window information or aperiodic time domain window information.

Optionally, the periodic time domain window information includes at least one of the following: a time domain window length, a time domain window period, or a time domain window start position. The aperiodic time domain window information includes a time domain window length and/or a time domain window start position.

Optionally, the time domain window length is in absolute time, and the absolute time refers to seconds, milliseconds, or microseconds.

Optionally, the time domain window length is in relative time, and the relative time refers to a quantity of system frames, a quantity of subframes, a quantity of slots, or a quantity of symbols.

Optionally, the time domain window length is determined by the terminal device according to network configuration information, or determined by the terminal device from a plurality of network-configured candidate time domain window lengths according to network indication information, or selected by the terminal device from a network-configured first value range. The first value range is a value range within which the time domain window length falls.

Optionally, the time domain window length is associated with a number of times of PDCCH/PDSCH repeated transmission; or
the time domain window length is associated with a beam or SSB.

Optionally, the time domain window period is in absolute time, and the absolute time refers to seconds, milliseconds, or microseconds.

Optionally, the time domain window period is in relative time, and the relative time refers to a quantity of system frames, a quantity of subframes, a quantity of slots, or a quantity of symbols.

Optionally, the time domain window period is determined by the terminal device according to network configuration information, or determined by the terminal device from a plurality of network-configured candidate time domain window periods according to network indication information, or selected by the terminal device from a network-configured second value range. The second value range is a value range within which the time domain window period falls.

Optionally, the time domain window period is associated with a number of times of PDCCH/PDSCH repeated transmission; or
the time domain window period is associated with the time domain window length; or
the time domain window period is associated with a beam or SSB.

Optionally, the time domain window start position is an absolute moment, and the absolute moment is represented by universal time coordinated (UTC), China standard time (CST), or Greenwich mean time (GMT).

Optionally, the time domain window start position is a relative moment, and the relative moment is represented by a system frame number, a subframe number, a slot number, or a symbol number.

Optionally, the time domain window start position is determined according to an offset, the offset indicates an interval between a first time domain position and the time domain window start position in time domain, and the first time domain position uses a system frame with a particular number, a subframe with a particular number, a slot with a particular number, or an OFDM symbol with a particular number.

Optionally, the first time domain position is a start position of a first system frame; or
the first time domain position is a receiving position of signaling for configuring the offset; or
the first time domain position is a receiving position of signaling for indicating an aperiodic time domain window start or restart; or
the first time domain position is a feedback position of a HARQ-ACK corresponding to the signaling for indicating an aperiodic time domain window start or restart.

Optionally, the offset is determined by the terminal device according to network configuration information, or determined by the terminal device from a plurality of network-configured candidate offsets according to network indication information, or selected by the terminal device from a network-configured third value range. The third value range is a value range within which the offset falls.

Optionally, a periodic time domain window start position is determined according to the following equation: $\left(N⋅{n}_{f}+{n}_{s}-{T}_{offset}\right) mod T = 0 ;$
where *N* represents a quantity of time units in a system frame, *n_{f}* represents a system frame number, *nₛ* represents a time unit number in the system frame, *T* represents the time domain window period, mod represents modulo, and *T_{offset}* represents an offset. Optionally, the offset is associated with a number of times of PDCCH/PDSCH repeated transmission; or
the offset is associated with the time domain window length; or
the offset is associated with the time domain window period; or
the offset is associated with a beam or SSB.

Optionally, a carrier that is in the time domain window and is used for carrying PDCCH/PDSCH satisfies requirements for power consistency and phase continuity.

Optionally, in terms of performing joint downlink channel estimation according to the time domain window information, the estimation unit 1402 is configured to:
perform downlink channel estimation according to the PDCCH/PDSCH DM-RSs bundled in the time domain window when the quality of a received signal is less than a preset threshold.

Optionally, the communication apparatus 1400 further includes a sending unit.

The sending unit is configured to send information for indicating a PDCCH/PDSCH DM-RS bundling capability. The PDCCH/PDSCH DM-RS bundling capability includes at least one of the following: a time domain window length supported by the terminal device, a time domain window period supported by the terminal device, or a time domain window start position supported by the terminal device.

The foregoing describes the solutions in this embodiment of this application mainly from the perspective of a method side. The following describes, by way of example, functional units of another communication apparatus in this embodiment. It can be understood that, to implement the foregoing functions, the network device includes corresponding hardware structures and/or software modules for performing the functions. A person skilled in the art should be easily aware that units, algorithms, and steps in examples described with reference to embodiments disclosed in this specification can be implemented in this embodiment of this application by hardware or a combination of hardware and computer software. Whether a function is performed by hardware or computer software driving hardware depends on particular applications and design constraint conditions of the technical solutions. A person skilled in the art may use different methods to implement the described functions for each particular application, but this implementation should not be considered as falling outside the scope of this embodiment.

In this embodiment of this application, functional units of the network device may be divided according to the foregoing method example. For example, the division of the functional units may be implemented corresponding to the functions, or two or more functions may be integrated into one processing unit. The above integrated unit may be implemented in the form of hardware, or may be implemented in the form of a software program module. It should be noted that, in the embodiments of this application, the division of units is an example, and is merely logical function division, and other division manners may exist during actual implementation.

When integrated units are used, FIG. 15 is a composition block diagram of functional units of another communication apparatus according to an embodiment of this application. The communication apparatus 1500 includes a sending unit 1501.

Optionally, the sending unit 1501 may be a modular unit configured to send signals, information, and the like, which is not specifically limited.

Optionally, the communication apparatus 1500 may further include a storage unit, configured to store computer program codes or instructions executed by the communication apparatus 1500. The storage unit may be a memory.

Optionally, the communication apparatus 1500 may be a chip or a chip module.

Optionally, the sending unit 1501 may be integrated into a communication unit. The communication unit may be a communication interface, a transceiver, a transceiver circuit, or the like.

Optionally, the sending unit 1501 may be integrated into a processing unit.

It should be noted that the processing unit may be a processor or a controller, for example, a baseband processor, a baseband chip, a central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing unit may implement or execute various exemplary logical blocks, modules, and circuits described with reference to contents disclosed in this embodiment. The processing unit may also be a combination for implementing a computing function, for example, a combination including one or more microprocessors, a combination of the DSP and the microprocessor.

Optionally, the communication apparatus 1500 is configured to perform any step or the like executed by a chip/chip module/network device or the like in the foregoing method embodiments.

During specific implementation, the sending unit 1501 is configured to execute any step in the foregoing method embodiments, and when executing an action such as sending, may optionally invoke another unit to complete a corresponding operation. Detailed descriptions are provided below.

The sending unit 1501 is configured to send time domain window information, the time domain window information being used for determining a time domain window in which PDCCH/PDSCH DM-RSs are bundled.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

It should be noted that for specific implementation of each operation in the embodiment in FIG. 15, reference may be made to descriptions in the foregoing method embodiment, and details are not described herein again.

Optionally, the time domain window information includes periodic time domain window information or aperiodic time domain window information.

Optionally, the periodic time domain window information includes at least one of the following: a time domain window length, a time domain window period, or a time domain window start position. The aperiodic time domain window information includes a time domain window length and/or a time domain window start position.

Optionally, the time domain window length is in absolute time, and the absolute time refers to seconds, milliseconds, or microseconds.

Optionally, the time domain window length is in relative time, and the relative time refers to a quantity of system frames, a quantity of subframes, a quantity of slots, or a quantity of symbols.

Optionally, the time domain window length is configured by the network device or indicated by the network device from a plurality of configured candidate time domain window lengths.

Optionally, the time domain window length is associated with a number of times of PDCCH/PDSCH repeated transmission; or
the time domain window length is associated with a beam or SSB.

Optionally, the time domain window period is in absolute time, and the absolute time refers to seconds, milliseconds, or microseconds.

Optionally, the time domain window period is in relative time, and the relative time refers to a quantity of system frames, a quantity of subframes, a quantity of slots, or a quantity of symbols.

Optionally, the time domain window period is configured by the network device or indicated by the network device from a plurality of configured candidate time domain window periods.

Optionally, the time domain window period is associated with a number of times of PDCCH/PDSCH repeated transmission; or
the time domain window period is associated with the time domain window length; or
the time domain window period is associated with a beam or SSB.

Optionally, the time domain window start position is an absolute moment, and the absolute moment is represented by universal time coordinated (UTC), China standard time (CST), or Greenwich mean time (GMT).

Optionally, the time domain window start position is a relative moment, and the relative moment is represented by a system frame number, a subframe number, a slot number, or a symbol number.

Optionally, the time domain window start position is determined according to an offset, the offset indicates an interval between a first time domain position and the time domain window start position in time domain, and the first time domain position uses a system frame with a particular number, a subframe with a particular number, a slot with a particular number, or an OFDM symbol with a particular number.

Optionally, the first time domain position is a start position of a first system frame; or
the first time domain position is a receiving position of signaling for configuring the offset; or
the first time domain position is a receiving position of signaling for indicating an aperiodic time domain window start or restart; or
the first time domain position is a feedback position of a hybrid automatic repeat request-acknowledgement (HARQ-ACK) corresponding to the signaling for indicating an aperiodic time domain window start or restart.

Optionally, a periodic time domain window start position is determined according to the following equation: $\left(N⋅{n}_{f}+{n}_{s}-{T}_{offset}\right) mod T = 0 ;$
where *N* represents a quantity of time units in a system frame, *n_{f}* represents a system frame number, *nₛ* represents a time unit number in the system frame, *T* represents the time domain window period, mod represents modulo, and *T_{offset}* represents an offset. Optionally, the offset is configured by the network device or indicated by the network device from a plurality of configured candidate offsets.

Optionally, the offset is associated with a number of times of PDCCH/PDSCH repeated transmission; or
the offset is associated with the time domain window length; or
the offset is associated with the time domain window period; or
the offset is associated with a beam or SSB.

Optionally, a carrier that is in the time domain window and is used for carrying PDCCH/PDSCH satisfies requirements for power consistency and phase continuity.

Optionally, the communication apparatus 1500 further includes a receiving unit.

The receiving unit is configured to receive information for indicating a PDCCH/PDSCH DM-RS bundling capability. The PDCCH/PDSCH DM-RS bundling capability includes at least one of the following: a time domain window length supported by the terminal device, a time domain window period supported by the terminal device, or a time domain window start position supported by the terminal device.

The structure of a terminal device in this embodiment is described below by using an example.

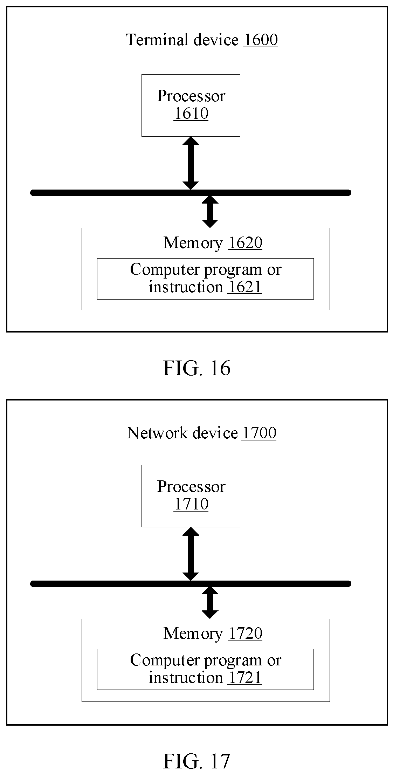

Referring to FIG. 16, FIG. 16 is a schematic structural diagram of a terminal device according to an embodiment of this application. The terminal device 1600 may include a processor 1610, a memory 1620, and a communication bus configured to connect the processor 1610 and the memory 1620.

Optionally, the memory 1620 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1620 is configured to store program codes executed and data transmitted by the terminal device 1600.

Optionally, the terminal device 1600 further includes a communication interface, configured to receive and send data.

Optionally, the terminal device 1600 may be the foregoing first terminal device.

Optionally, the processor 1610 may be one or more CPUs. When the processor 1610 is one CPU, the CPU may be a single-core CPU, or may be a multi-core CPU.

Optionally, the processor 1610 may be a baseband chip, a chip, a CPU, a general-purpose processor, a DSP, an ASIC, an FPGA, or another programmable logic device, a transistor logic device, a hardware component, or any combination thereof.

During specific implementation, the processor 1610 in the terminal device 1600 is configured to execute a computer program or an instruction 1621 stored in the memory 1620, to execute the following operations:
receiving time domain window information, the time domain window information being used for determining a time domain window in which PDCCH/PDSCH DM-RSs are bundled; and
performing downlink channel estimation according to the PDCCH/PDSCH DM-RSs bundled in the time domain window.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

It should be noted that for specific implementation of each operation, corresponding descriptions in the foregoing method embodiment may be used, and the terminal device 1600 may be configured to execute the foregoing method embodiment of this embodiment, which is not described herein again.

The structure of a network device in this embodiment is described below by using an example.

Referring to FIG. 17, FIG. 17 is a schematic structural diagram of a network device according to an embodiment of this application. The network device 1700 includes a processor 1710, a memory 1720, and a communication bus configured to connect the processor 1710 and the memory 1720.

Optionally, the memory 1720 includes, but is not limited to, an RAM, an ROM, an EPROM, or a CD-ROM. The memory 1720 is configured to store related instructions and data.

Optionally, the network device 1700 further includes a communication interface, configured to receive and send data.

Optionally, the processor 1710 may be one or more CPUs. When the processor 1710 is one CPU, the CPU may be a single-core CPU, or may be a multi-core CPU.

Optionally, the processor 1710 may be a baseband chip, a chip, a CPU, a general-purpose processor, a DSP, an ASIC, an FPGA, or another programmable logic device, a transistor logic device, a hardware component, or any combination thereof.

Optionally, the processor 1710 in the network device 1700 is configured to execute a computer program or an instruction 1721 stored in the memory 1720, to execute the following operation:
sending time domain window information, the time domain window information being used for determining a time domain window in which PDCCH/PDSCH DM-RSs are bundled.

As can be seen, because some communication systems may have limited downlink coverage, in this application, a time domain window in which PDCCH/PDSCH DM-RSs are bundled can be introduced, and time units in the time domain window are considered as a same group. PDCCH/PDSCH DM-RSs of time units in the same group can be bundled together for channel estimation, and PDCCH/PDSCH DM-RSs of time units in different groups are not bundled.

In this way, in this application, the time domain window in which the PDCCH/PDSCH DM-RSs are bundled can be determined by using the time domain window information, so that downlink channel estimation can be performed according to the PDCCH/PDSCH DM-RSs bundled in the time domain window, that is, downlink channel estimation is performed by jointly using the PDCCH/PDSCH DM-RSs of the time units in the time domain window to implement joint downlink channel estimation, so as to obtain more accurate downlink channel information through joint downlink channel estimation, improve demodulation performance of downlink signals, improve downlink transmission quality, and finally implement downlink coverage enhancement.

It should be noted that for specific implementation of each operation, corresponding descriptions in the foregoing method embodiment may be used, and the network device 1700 may be configured to execute the foregoing method embodiment of this embodiment, which is not described herein again.

Other related contents of this embodiment is described below by using an example.

Optionally, the foregoing method embodiment may be applied to a terminal device or applied in a terminal device. That is, an execution body of the foregoing method embodiment may be a terminal device, or may be a chip, a chip module, a module, or the like, which is not specifically limited.

Optionally, the foregoing method embodiment may be applied to a network device or applied in a network device. That is, an execution body of the foregoing method embodiment may be a network device, or may be a chip, a chip module, a module, or the like, which is not specifically limited.

An embodiment of this application further provides a chip, including a processor, a memory, and a computer program or an instruction stored in the memory. The processor executes the computer program or the instruction to implement the steps described in the foregoing method embodiment.

An embodiment of this application further provides a chip module, including a transceiver component and a chip. The chip includes a processor, a memory, and a computer program or an instruction stored in the memory. The processor executes the computer program or the instruction to implement the steps described in the foregoing method embodiment.

An embodiment of this application further provides a computer-readable storage medium. The computer-readable storage medium stores a computer program or an instruction. When the computer program or the instruction is executed, the steps described in the foregoing method embodiment are implemented.

An embodiment of this application further provides a computer program product, including a computer program or an instruction. When the computer program or the instruction is executed, the steps described in the foregoing method embodiment are implemented.

An embodiment of this application further provides a communication system, including the foregoing terminal device and the foregoing network device.

It should be noted that, for ease of description, the foregoing embodiments are described as a series of action combinations. A person skilled in the art should know that this application is not limited to the described order of the actions, because some steps in the embodiments of this application may be performed in other orders or simultaneously. In addition, a person skilled in the art should also know that all embodiments described in the specification are preferred embodiments, and the related actions, steps, modules, units, or the like are not necessarily mandatory to the embodiments of this application.

In the foregoing embodiments, the descriptions of each embodiment of this application have different focuses, and for a part that is not described in detail in an embodiment, reference may be made to the relevant description of another embodiment.

Steps of the methods or algorithms described in the embodiments of this application may be implemented by hardware, or may be implemented by a processor by executing a software instruction. The software instruction may include a corresponding software module, and the software module may be stored in an RAM, a flash memory, an ROM, an EPROM, an electrically EPROM (electrically EPROM, EEPROM), a register, a hard disk, a mobile hard disk, a compact disc read-only memory (CD-ROM), or any storage medium of other forms known in the art. An exemplary storage medium is coupled to a processor, so that the processor can read information from the storage medium or write information into the storage medium. Certainly, the storage medium may also be a component of the processor. The processor and the storage medium may be located in an ASIC. In addition, the ASIC may be located in a terminal device or a management device. Certainly, the processor and the storage medium may also exist in the terminal device or the management device as discrete components.

A person skilled in the art should be aware that in one or more of the above examples, the functions described in the embodiments of this application may be implemented in whole or in part by software, hardware, firmware, or any combination thereof. When the functions are implemented by software, all or part of the functions may be implemented in the form of a computer program product. The computer program product includes one or more computer instructions. When the computer program instructions are loaded and executed on the computer, the procedures or functions in the embodiments of this application are all or partially generated. The computer may be a general-purpose computer, a special-purpose computer, a computer network, or another programmable apparatus. The computer instructions may be stored in the computer-readable storage medium, or transmitted from one computer-readable storage medium to another computer-readable storage medium. For example, the computer instructions may be transmitted from one website, computer, server, or data center to another website, computer, server, or data center in a wired (for example, by using a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

The modules/units included in the apparatuses and products described in the foregoing embodiments may be software modules/units, or may be hardware modules/units, or may be a combination of software modules/units and hardware modules/units. For example, for each apparatus or product applied to or integrated into a chip, modules/units included in the apparatus or product may be implemented by using hardware such as a circuit, or at least some modules/units may be implemented by using a software program running on a processor integrated inside the chip, and the remaining (if any) modules/units may be implemented by using hardware such as a circuit. For each apparatus or product applied to or integrated into a chip module, modules/units included in the apparatus or product may be implemented by using hardware such as a circuit, different modules/units may be located in a same component (for example, a chip or a circuit module) or different components of the chip module, or at least some modules/units may be implemented by using a software program running on a processor integrated inside the chip module, and the remaining (if any) modules/units may be implemented by using hardware such as a circuit. For each apparatus or product applied to or integrated into a terminal device, modules/units included in the apparatus or product may be implemented by using hardware such as a circuit, different modules/units may be located in a same component (for example, a chip or a circuit module) or different components in the terminal device, or at least some modules/units may be implemented by using a software program running on a processor integrated in the terminal device, and the remaining (if any) modules/units may be implemented by using hardware such as a circuit.

The objectives, technical solutions, and beneficial effects of the embodiments of this application are further described in detail in the foregoing specific implementations. It should be understood that the foregoing descriptions are merely specific implementations of the embodiments of this application, but are not intended to limit the protection scope of the embodiments of this application. Any modification, equivalent replacement, or improvement made based on the technical solutions in the embodiments of this application shall fall within the protection scope of the embodiments of this application.

## Claims

1. A communication method, applied to a non-terrestrial network system, the non-terrestrial network system comprising a terminal device and a network device, the method being executed by the terminal device, the method comprising:
receiving, by the terminal device, time domain window information from the network device, the time domain window information being used for determining a time domain window in which physical downlink control channel (PDCCH)/physical downlink shared channel (PDSCH) demodulation reference signals (DM-RSs) are bundled; and
performing, by the terminal device, downlink channel estimation according to the PDCCH/PDSCH DM-RSs bundled in the time domain window.

2. The method according to claim 1, wherein the time domain window information comprises periodic time domain window information or aperiodic time domain window information.

3. The method according to claim 2, wherein the periodic time domain window information comprises at least one of the following: a time domain window length, a time domain window period, or a time domain window start position; and
the aperiodic time domain window information comprises a time domain window length and/or a time domain window start position.

4. The method according to claim 3, wherein the time domain window length is selected by the terminal device from a network-configured first value range, and the first value range is a value range within which the time domain window length falls.

5. The method according to claim 3, wherein the time domain window length has an association relationship with a number of times of PDCCH/PDSCH repeated transmission, and the association relationship between the time domain window length and the number of times of PDCCH/PDSCH repeated transmission is network-configured, preconfigured, or stipulated by a communication standard protocol; or
the time domain window length has an association relationship with a beam or synchronization signal block (SSB), and the association relationship between the time domain window length and the beam or SSB is network-configured, preconfigured, or stipulated by a communication standard protocol.

6. The method according to claim 3, wherein the time domain window period is selected by the terminal device from a network-configured second value range, and the second value range is a value range within which the time domain window period falls.

7. The method according to claim 3, wherein the time domain window period has an association relationship with a number of times of PDCCH/PDSCH repeated transmission, and the association relationship between the time domain window period and the number of times of PDCCH/PDSCH repeated transmission is network-configured, preconfigured, or stipulated by a communication standard protocol; or
the time domain window period has an association relationship with the time domain window length, and the association relationship between the time domain window period and the time domain window length is network-configured, preconfigured, or stipulated by a communication standard protocol; or
the time domain window period has an association relationship with a beam or SSB, and the association relationship between the time domain window period and the beam or SSB is network-configured, preconfigured, or stipulated by a communication standard protocol.

8. The method according to claim 3, wherein the time domain window start position is determined according to an offset, the offset indicates an interval between a first time domain position and the time domain window start position in time domain, and the first time domain position uses a system frame with a particular number, a subframe with a particular number, a slot with a particular number, or an orthogonal frequency division multiplexing (OFDM) symbol with a particular number.

9. The method according to claim 8, wherein the first time domain position is a start position of a first system frame; or
the first time domain position is a start position of signaling for configuring the offset; or
the first time domain position is a receiving position of signaling for indicating an aperiodic time domain window start or restart; or
the first time domain position is a feedback position of a hybrid automatic repeat request-acknowledgement (HARQ-ACK) corresponding to the signaling for indicating an aperiodic time domain window start or restart.

10. The method according to claim 3, wherein a periodic time domain window start position is determined according to the following equation: $\left(N⋅{n}_{f}+{n}_{s}-{T}_{offset}\right) mod T = 0 ;$ wherein *N* represents a quantity of time units in a system frame, *n_{f}* represents a system frame number, *nₛ* represents a time unit number in the system frame, *T* represents the time domain window period, mod represents modulo, and *T_{offset}* represents an offset.

11. The method according to claim 8 or 10, wherein the offset is selected by the terminal device from a network-configured third value range, and the third value range is a value range within which the offset falls.

12. The method according to claim 8 or 10, wherein the offset has an association relationship with a number of times of PDCCH/PDSCH repeated transmission, and the association relationship between the offset and the number of times of PDCCH/PDSCH repeated transmission is network-configured, preconfigured, or stipulated by a protocol; or
the offset has an association relationship with the time domain window length, and the association relationship between the offset and the time domain window length is network-configured, preconfigured, or stipulated by a communication standard protocol; or
the offset has an association relationship with the time domain window period, and the association relationship between the offset and the time domain window period is network-configured, preconfigured, or stipulated by a communication standard protocol; or
the offset has an association relationship with a beam or SSB, and the association relationship between the offset and the beam or SSB is network-configured, preconfigured, or stipulated by a communication standard protocol.

13. The method according to any one of claims 1 to 12, wherein a carrier that is in the time domain window and is used for carrying PDCCH/PDSCH satisfies requirements for power consistency and phase continuity.

14. The method according to any one of claims 1 to 13, wherein the receiving, by the terminal device, time domain window information from the network device comprises:
receiving, by the terminal device, the time domain window information when quality of a signal received from the network device is less than a preset threshold.

15. The method according to any one of claims 1 to 14, wherein the performing, by the terminal device, downlink channel estimation according to the PDCCH/PDSCH DM-RSs bundled in the time domain window comprises:
performing, by the terminal device, downlink channel estimation according to the PDCCH/PDSCH DM-RSs bundled in the time domain window when the quality of the signal received from the network device is less than the preset threshold.

16. The method according to any one of claims 1 to 15, wherein before the receiving, by the terminal device, time domain window information from the network device, the method further comprises:
sending, by the terminal device, information for indicating a PDCCH/PDSCH DM-RS bundling capability to the network device, the PDCCH/PDSCH DM-RS bundling capability comprising at least one of the following: a time domain window length supported by the terminal device, a time domain window period supported by the terminal device, or a time domain window start position supported by the terminal device.

17. A communication method, applied to a non-terrestrial network system, the non-terrestrial network system comprising a terminal device and a network device, the method being executed by the network device, the method comprising:
sending, by the network device, time domain window information to the terminal device, the time domain window information being used for determining a time domain window in which physical downlink control channel (PDCCH)/physical downlink shared channel (PDSCH) demodulation reference signals (DM-RSs) are bundled.

18. The method according to claim 17, wherein the time domain window information comprises periodic time domain window information or aperiodic time domain window information.

19. The method according to claim 18, wherein the periodic time domain window information comprises at least one of the following: a time domain window length, a time domain window period, or a time domain window start position; and
the aperiodic time domain window information comprises a time domain window length and/or a time domain window start position.

20. The method according to claim 19, wherein the time domain window length is configured by the network device or indicated by the network device from a plurality of configured candidate time domain window lengths.

21. The method according to claim 19, wherein the time domain window length has an association relationship with a number of times of PDCCH/PDSCH repeated transmission, and the association relationship between the time domain window length and the number of times of PDCCH/PDSCH repeated transmission is network-configured, preconfigured, or stipulated by a communication standard protocol; or
the time domain window length has an association relationship with a beam or synchronization signal block (SSB), and the association relationship between the time domain window length and the beam or SSB is network-configured, preconfigured, or stipulated by a communication standard protocol.

22. The method according to claim 19, wherein the time domain window period is configured by the network device or indicated by the network device from a plurality of configured candidate time domain window periods.

23. The method according to claim 19, wherein the time domain window period has an association relationship with a number of times of PDCCH/PDSCH repeated transmission, and the association relationship between the time domain window period and the number of times of PDCCH/PDSCH repeated transmission is network-configured, preconfigured, or stipulated by a communication standard protocol; or
the time domain window period has an association relationship with the time domain window length, and the association relationship between the time domain window period and the time domain window length is network-configured, preconfigured, or stipulated by a communication standard protocol; or
the time domain window period has an association relationship with a beam or SSB, and the association relationship between the time domain window period and the beam or SSB is network-configured, preconfigured, or stipulated by a communication standard protocol.

24. The method according to claim 19, wherein the time domain window start position is determined according to an offset, the offset indicates an interval between a first time domain position and the time domain window start position in time domain, and the first time domain position uses a system frame with a particular number, a subframe with a particular number, a slot with a particular number, or an orthogonal frequency division multiplexing (OFDM) symbol with a particular number.

25. The method according to claim 24, wherein the first time domain position is a start position of a first system frame; or
the first time domain position is a receiving position of signaling for indicating an aperiodic time domain window start or restart; or
the first time domain position is a feedback position of a hybrid automatic repeat request-acknowledgement (HARQ-ACK) corresponding to the signaling for indicating an aperiodic time domain window start or restart.

26. The method according to claim 19, wherein a periodic time domain window start position is determined according to the following equation: $\left(N⋅{n}_{f}+{n}_{s}-{T}_{offset}\right) mod T = 0 ;$ wherein *N* represents a quantity of time units in a system frame, *n_{f}* represents a system frame number, *nₛ* represents a time unit number in the system frame, *T* represents the time domain window period, mod represents modulo, and *T_{offset}* represents an offset.

27. The method according to claim 24 or 26, wherein the offset is configured by the network device or indicated by the network device from a plurality of configured candidate offsets.

28. The method according to claim 24 or 26, wherein the offset has an association relationship with a number of times of PDCCH/PDSCH repeated transmission, and the association relationship between the offset and the number of times of PDCCH/PDSCH repeated transmission is network-configured, preconfigured, or stipulated by a communication standard protocol; or
the offset has an association relationship with the time domain window length, and the association relationship between the offset and the time domain window length is network-configured, preconfigured, or stipulated by a communication standard protocol; or
the offset has an association relationship with the time domain window period, and the association relationship between the offset and the time domain window period is network-configured, preconfigured, or stipulated by a communication standard protocol; or
the offset has an association relationship with a beam or SSB, and the association relationship between the offset and the beam or SSB is network-configured, preconfigured, or stipulated by a communication standard protocol.

29. The method according to any one of claims 17 to 28, wherein a carrier that is in the time domain window and is used for carrying PDCCH/PDSCH satisfies requirements for power consistency and phase continuity.

30. The method according to any one of claims 17 to 29, wherein before the sending, by the network device, time domain window information to the terminal device, the method further comprises:
receiving, by the network device, information for indicating a PDCCH/PDSCH DM-RS bundling capability to the terminal device, the PDCCH/PDSCH DM-RS bundling capability comprising at least one of the following: a time domain window length supported by the terminal device, a time domain window period supported by the terminal device, or a time domain window start position supported by the terminal device.

31. A terminal device, comprising a processor, a memory, and a computer program or an instruction stored in the memory, the processor executing the computer program or the instruction to implement the steps of the method according to any one of claims 1 to 16.

32. A network device, comprising a processor, a memory, and a computer program or an instruction stored in the memory, the processor executing the computer program or the instruction to implement the steps of the method according to any one of claims 17 to 30.

33. A computer-readable storage medium, storing a computer program or an instruction, the computer program or the instruction, when being executed, causes the steps of the method according to any one of claims 1 to 30 to be executed.

34. A computer program product, comprising a computer program or an instruction, the computer program or the instruction, when being executed, causes the steps of the method according to any one of claims 1 to 30 to be executed.
